# EUROPÄISCHE PATENTSCHRIFT

(11) **EP 3 924 171 B1**
(45) Veröffentlichungstag und Bekanntmachung des Hinweises auf die Patenterteilung: **27.09.2023**
(21) Anmeldenummer: 20706173.0
(22) Anmeldetag: 14.02.2020
(51) Int. Cl.: B29C 64/379, B29C 64/245, B22F 3/105

(54) **VORRICHTUNG ZUM HERSTELLEN EINES DREIDIMENSIONALEN OBJEKTS**
APPARATUS FOR PRODUCING A THREE-DIMENSIONAL OBJECT
DISPOSITIF POUR LA FABRICATION D'UN OBJET TRIDIMENSIONNEL

(30) Priorität: 14.02.2019 DE 102019103815
(43) Veröffentlichungstag der Anmeldung: 22.12.2021
(73) Patentinhaber: Rapid Shape GmbH, 71296 Heimsheim (DE)
(72) Erfinder: SCHULTHEISS, Andreas, 75417 Mühlacker (DE); GEITNER, Andreas, 71229 Leonberg (DE)
(74) Vertreter: Hoeger, Stellrecht & Partner Patentanwälte mbB
(86) Internationale Anmeldenummer: PCT/EP2020/053945
(87) Internationale Veröffentlichungsnummer: WO 2020/165431

(56) Entgegenhaltungen:
- EP-A1- 3 392 026
- JP-A- 2001 277 367

## Beschreibung

Die vorliegende Erfindung betrifft eine Vorrichtung zum Herstellen eines dreidimensionalen Objekts durch Verfestigen, insbesondere schichtweise oder kontinuierlich, eines durch Strahlung verfestigbaren Materials, welche Vorrichtung eine Trägereinrichtung zum Halten des verfestigten dreidimensionalen Objekts umfasst, wobei die Vorrichtung (10) eine Ablöseeinrichtung (42) umfasst zum automatischen Ablösen eines an der Trägereinrichtung (16) gehaltenen dreidimensionalen Objekts (18)..

Vorrichtungen der eingangs beschriebenen Art, in Form von sogenannten 3D-Druckern sind beispielsweise aus der DE 10 2013 107 571 A1 bekannt. Die verfestigten dreidimensionalen Objekte sind nach Fertigstellung, also Aushärtung, an der Trägereinrichtung gehalten und noch mit nicht verfestigtem verfestigbarem Material kontaminiert. Beim Entfernen der dreidimensionalen Objekte von der Trägereinrichtung besteht daher insbesondere das Problem, dass es zu Kontaminationen eines Bedieners oder Nutzers der Vorrichtung kommen kann.

In der EP 3 392 026 A1 ist eine Vorrichtung zum automatischen Entfernen von mit einem 3D-Drucker gedruckten Teilen beschrieben. Eine Vorrichtung zum Herstellen dreidimensionaler Objekte sowie ein Verfahren zum Herstellen derselben sind aus der JP 2001 277367 A bekannt.

Es ist daher eine Aufgabe der vorliegenden Erfindung, eine Vorrichtung der eingangs beschriebenen Art so zu verbessern, dass die Herstellung dreidimensionaler Objekte vereinfacht wird.

Diese Aufgabe wird bei einer Vorrichtung der eingangs beschriebenen Art erfindungsgemäß dadurch gelöst, dass die Vorrichtung eine Schutzeinrichtung umfasst zum Schützen der Ablöseeinrichtung.

Eine Vorrichtung zum Herstellen eines dreidimensionalen Objekts in der beschriebenen Weise weiterzubilden, hat insbesondere den Vorteil, dass eine Bedienperson nicht in Kontakt mit der Vorrichtung, also insbesondere nicht mit der Trägereinrichtung und nicht mit dem ausgebildeten dreidimensionalen Objekt, kommen muss. Insbesondere ermöglicht eine solche Ablöseeinrichtung, die Herstellung dreidimensionaler Objekte vollständig zu automatisieren. So lassen sich Fertigungszeiten signifikant verkürzen, da ein Entnahmevorgang hergestellter dreidimensionaler Objekte definiert und somit standardisiert durchgeführt werden kann. Direkt nach Ablösen des dreidimensionalen Objekts mit der Ablöseeinrichtung kann die Vorrichtung zum Herstellen weiterer dreidimensionaler Objekte genutzt werden. Günstig ist es, dass die Vorrichtung eine Schutzeinrichtung umfasst zum Schützen der Ablöseeinrichtung, insbesondere in der Baustellung. Die Schutzeinrichtung kann insbesondere dazu dienen, die Ablöseeinrichtung vor einer Kontamination mit verfestigbarem Material zu schützen, was insbesondere eine Schneidwirkung eines eine Schneide aufweisenden Ablöseelements beeinträchtigen könnte.

Auf einfache Weise lässt sich die Vorrichtung ausbilden, wenn die Ablöseeinrichtung mindestens ein Ablöseelement umfasst und wenn das mindestens eine Ablöseelement und die Trägereinrichtung relativ zueinander bewegbar angeordnet oder ausgebildet sind. Zum Ablösen des dreidimensionalen Objekts von der Trägereinrichtung müssen also das mindestens eine Ablöseelement und die Trägereinrichtung nur relativ zueinander bewegt werden. Dies ermöglicht die bewegbare Anordnung beziehungsweise Ausbildung des mindestens einen Ablöseelements und der Trägereinrichtung. Insbesondere können auch zwei oder mehr Ablöseelemente vorgesehen sein. Beispielsweise können für eine optimale Abtrennung des hergestellten dreidimensionalen Objekts zwei Ablöseelemente oder auch mehr nacheinander relativ zur Trägereinrichtung bewegt werden, beziehungsweise die Trägereinrichtung relativ zu den Ablöseelementen.

Einfach und sicher lässt sich ein an der Trägereinrichtung gehaltenes dreidimensionales Objekt ablösen, wenn das mindestens eine Ablöseelement eine oder mehrere Klingen mit einer Schneide umfasst oder wenn das mindestens eine Ablöseelement in Form einer Klinge mit mindestens einer Schneide ausgebildet ist. Insbesondere kann die Schneide derart angeordnet und relativ zur Trägereinrichtung bewegt werden, dass diese an der Trägereinrichtung anliegt oder in einem geringen Abstand von dieser relativ zur Trägereinrichtung bewegt wird. Beispielsweise kann die Klinge in Form einer Doppelklinge mit zwei Schneiden ausgebildet sein. Das Ablöseelement kann insbesondere eine, zwei, drei oder mehr Klingen tragen oder umfassen. Insbesondere kann das Ablöseelement ein Trägerelement für eine oder mehrere Klingen umfassen.

Vorteilhaft ist es, wenn die Klinge einen Klingenkörper mit einer Klingenkörpervorderseite und einer Klingenkörperrückseite aufweist und wenn der Klingenkörper mindestens eine bezogen auf die Klingenkörpervorderseite und/ oder die Klingenkörperrückseite abgeschrägte Seitenfläche aufweist zur Ausbildung der Schneide mit einer Schneidkante. Insbesondere kann der Klingenkörper zwei abgeschrägte Seitenflächen aufweisen. Vorzugsweise definiert die Schneidkante einen spitzen Winkel zwischen den abgeschrägten Seitenflächen. Insbesondere können alle Klingen des Ablöseelements, wenn dieses mehrere Klingen trägt, in der beschriebenen Weise ausgebildet sein.

Günstig ist es, wenn die mindestens eine abgeschrägte Seitenfläche mit der Klingenkörpervorderseite einen stumpfen Winkel einschließt. Auf diese Weise kann ein Übergang zwischen der abgeschrägten Seitenfläche und der Klingenkörpervorderseite sehr flach ausgeführt werden. Insbesondere ist eine Verrundung einer Kante zwischen der abgeschrägten Seitenfläche und der Klingenkörpervorderseite auf einfache Weise ausbildbar.

Ferner ist es vorteilhaft, wenn der Klingenkörper zwei abgeschrägte Seitenflächen zur Ausbildung der Schneide aufweist und wenn eine Schnittlinie der zwei abgeschrägten Seitenflächen die Schneidkante definiert. Auf diese Weise kann eine beidseitig angeschliffene Schneidkante ausgebildet werden.

Vorteilhaft ist es, wenn die mindestens eine abgeschrägte Seitenfläche mit der Klingenkörperrückseite einen stumpfen Winkel einschließt. Dies ermöglicht einen flachen Übergang zwischen der abgeschrägten Seitenfläche und der Klingenkörperrückseite. Insbesondere kann dieser Übergang, der bei eben ausgebildeten Flächen eine Kante bildet, auf einfache Weise verrundet werden.

Günstig ist es, wenn der Klingenkörper nur eine abgeschrägte Seitenfläche aufweist, die mit der Klingenkörperrückseite einen spitzen Winkel einschließt, und wenn eine Schnittlinie der abgeschrägten Seitenfläche mit der Klingenkörperrückseite die Schneidkante definiert. Diese Ausgestaltung ermöglicht auf einfache Weise die Ausbildung einer Schneidkante.

Einfach und kostengünstig lässt sich das Ablöseelement ausbilden, wenn die Klingenkörpervorderseite und die Klingenkörperrückseite parallel zueinander verlaufen. Insbesondere kann so das Ablöseelement aus einem flachen Blech ausgebildet werden.

Gemäß einer weiteren bevorzugten Ausführungsform der Erfindung kann vorgesehen sein, dass die Schneidkante von zwei sich schneidenden, die Schneide begrenzenden Schneidenflächen definiert wird, die sich unter einem Schneidenwinkel schneiden, und dass der Schneidenwinkel einen Wert in einem Bereich von etwa 10° bis etwa 50° aufweist. Insbesondere kann der Schneidenwinkel einen Wert in einem Bereich von etwa 20° bis etwa 40° aufweisen. Die Schneidenflächen können insbesondere durch abgeschrägte Seitenflächen oder die Klingenkörperrückseite oder die Klingenkörpervorderseite gebildet werden. Ein besonders kleiner Schneidenwinkel hat den Vorteil, dass beim Bewegen des Ablöseelements und der Trägereinrichtung relativ zueinander nur geringe Kräfte, insbesondere Scherkräfte, auf das hergestellte dreidimensionale Objekt wirken. Mit anderen Worten ist ein Ablösen oder Abschälen des dreidimensionalen Objekts von der Trägereinrichtung einfach und mit geringen Risiken hinsichtlich einer Beschädigung des dreidimensionalen Objekts möglich.

Vorteilhaft ist es, wenn das mindestens eine Ablöseelement zum und beim Ablösen des dreidimensionalen Objekts mit der Schneidkante an der Trägereinrichtung anliegt oder mit einem geringen Abstand von der Trägereinrichtung angeordnet ist. Insbesondere beim Anliegen der Schneidkante an der Trägereinrichtung kann das ausgebildete dreidimensionale Objekt abgeschält werden. Beispielsweise kann die Trägereinrichtung eine ebene Trägerplatte umfassen, auf der das dreidimensionale Objekt anhaftet. Bei einem geringen Abstand der Schneidkante von der Trägereinrichtung können insbesondere eine oder wenige Schichten des dreidimensionalen Objekts gezielt an der Trägereinrichtung belassen werden. Dies ist insbesondere dann vorteilhaft, wenn beispielsweise die Form einer ersten oder von wenigen Schichten zur Ausbildung des dreidimensionalen Objekts nicht in der gewünschten Weise wie definiert sichergestellt werden kann. Ferner können bei einer Ablöseeinrichtung, die zwei oder mehr Schneidkanten umfasst, die Schneidkanten einerseits an der Trägereinrichtung anliegen und andererseits in einem geringen Abstand von der Trägereinrichtung angeordnet sein. Dies ermöglicht ein verbessertes Ablösen des dreidimensionalen Objekts von der Trägereinrichtung.

Vorzugsweise schließen das mindestens eine Ablöseelement und eine von der Trägereinrichtung definierte Trägerfläche, auf der das dreidimensionale Objekt gehalten ist, einen Ablösewinkel ein. Insbesondere kann eine minimale Verformung des dreidimensionalen Objekts weiter minimiert werden, wenn der Ablösewinkel möglichst klein ist.

Vorteilhaft ist es, wenn eine der beiden Schneidenflächen von der Trägerfläche weg weist und diese Schneidenfläche und die Trägerfläche den Ablösewinkel zwischen sich einschließen. Der Ablösewinkel bildet also einen Keilwinkel, der das Ablösen oder Abheben oder Abschälen des dreidimensionalen Objekts von der Trägereinrichtung definiert. Insbesondere kann durch geeignete Wahl des Ablösewinkels eine Verformung des dreidimensionalen Objekts beim Ablösen minimiert werden.

Günstig ist es, wenn der Ablösewinkel einen Wert in einem Bereich von 0° bis etwa 20° aufweist. Insbesondere kann der Ablösewinkel in einem Bereich von 0° bis etwa 10° liegen. Je kleiner der Ablösewinkel ist, umso einfacher lassen sich dreidimensionale Objekte von der Trägereinrichtung ablösen.

Günstig ist es, wenn die Vorrichtung eine Ablösewinkeleinstelleinrichtung umfasst zum Einstellen des Ablösewinkels. Dies ermöglicht es insbesondere, den Ablösewinkel bei Bedarf zu verändern. Insbesondere kann eine Veränderung des Ablösewinkels vorteilhaft sein, wenn das verfestigbare Material beim Einsatz der Vorrichtung geändert wird. Insbesondere können so unterschiedlich harte dreidimensionale Objekte mit unterschiedlichen Ablösewinkeln zwischen Ablöseelement und Trägereinrichtung abgelöst werden. Je größer der Schneidenwinkel ist und damit zwangsläufig der Ablösewinkel, umso geringer ist üblicherweise der Verschleiß der Schneidkante. Je kleiner der Schneidenwinkel ist, umso größer sind ein Verschleiß und ein Risiko einer Beschädigung der Schneidkante.

Auf besonders einfache und kostengünstige Weise lässt sich die Ablöseeinrichtung ausbilden, wenn der Ablösewinkel unveränderbar ist.

Vorzugsweise umfasst die Ablöseeinrichtung zwei Ablöseelemente, die voneinander beabstandet angeordnet sind. Dies ermöglicht es, die zwei Ablöseelemente nacheinander zwischen das dreidimensionale Objekt und die Trägereinrichtung einzubringen, um diese voneinander zu trennen. Zwei Ablöseelemente vorzusehen, gegebenenfalls auch mehr, kann eine besonders saubere Ablösung des dreidimensionalen Objekts von der Trägereinrichtung sicherstellen. So können weitere dreidimensionale Objekte direkt nach dem Ablösen ausgebildet werden. Eine weitere Reinigung der Trägereinrichtung beziehungsweise deren Trägerfläche ist dann nicht zwingend erforderlich.

Um eine saubere Trennung des dreidimensionalen Objekts von der Trägereinrichtung zu erreichen, ist es günstig, wenn die beiden Schneidkanten der beiden Ablöseelemente voneinander beabstandet angeordnet sind und wenn die beiden Schneidkanten eine Schneidkantenebene definieren, die parallel oder im Wesentlichen parallel zur Trägerfläche verläuft. Beispielsweise können beide Schneidkanten an der Fläche anliegen oder in geringem Abstand von dieser angeordnet sein. Wie oben beschrieben kann so das ausgebildete dreidimensionale Objekt vollständig oder bis auf einen an der Trägerfläche verbleibenden kleinen Teil von der Trägereinrichtung abgetrennt werden.

Ferner kann es vorteilhaft sein, wenn die Schneide eine gezahnte Schneidkante umfasst mit mehreren parallel zueinander versetzt angeordneten Schneidkantenabschnitten und wenn die Schneidkantenabschnitte eine gemeinsame Schneidkantenebene definieren, die parallel oder im Wesentlichen parallel zur Trägerfläche verläuft. Eine derart gezahnte Schneidkante kann insbesondere dann vorteilhaft eingesetzt werden, wenn die Trägereinrichtung, beispielsweise eine Trägerplatte derselben, Vertiefungen aufweist. Erste Schichten des dreidimensionalen Objekts können in diese Vertiefungen eintauchende oder vorstehende Vorsprünge ausbilden, die mit einer durchgehenden Schneidkante abgetrennt würden. Insbesondere kann die gezahnte Schneidkante derart angeordnet sein, dass mit dem dreidimensionalen Objekt zuerst Schneidkantenabschnitte in Kontakt kommen, die am weitesten vorstehende Schneidkantenabschnitte der gezahnten Schneidkante bilden. Diese können dann mit Bereichen des dreidimensionalen Objekts, die nicht in die Vertiefungen der Trägereinrichtung vorstehen, in Kontakt kommen. Die zurückgesetzten Schneidkantenabschnitte können sich dann zwischen die schon angehobene Unterseite des dreidimensionalen Objekts und die Trägerfläche schieben, ohne das dreidimensionale Objekt in unerwünschter Weise zu beschädigen. Das Ablösen dreidimensionaler Objekte von Trägerplatten mit Vertiefungen kann durch eine solche gezahnte Schneidkante auf einfache Weise verbessert werden.

Vorteilhaft ist es, wenn die Schneidkante vordere Schneidkantenabschnitte und gegenüber diesen zurückgesetzte Schneidkantenabschnitte aufweist und wenn ein Schneidenwinkel der vorderen Schneidkantenabschnitte kleiner ist als ein Schneidenwinkel der zurückgesetzten Schneidkantenabschnitte. Die Ausbildung einer solchen gezahnten Schneide hat insbesondere den Vorteil, dass vordere Schneidkantenabschnitte mit einem kleineren Schneidenwinkel zwischen das dreidimensionale Objekt und die Trägereinrichtung eingreifen, sodass die zurückgesetzten Schneidkantenabschnitte dann zwischen das schon etwas abgelöste dreidimensionale Objekt und die Trägereinrichtung eingreifen können. Dies ermöglicht ein schonendes und sicheres Ablösen dreidimensionaler Objekte von einer Trägerfläche der Trägereinrichtung. Insbesondere können die zurückgesetzten Schneidkantenabschnitte einer gezahnten Schneidkante vorteilhaft bei mit Vertiefungen oder Durchbrechungen versehenen Trägerplatten von Trägereinrichtungen eingesetzt werden, um Vorsprünge an den dreidimensionalen Objekten nicht in unerwünschter Weise abzutrennen.

Um ein sicheres Ablösen dreidimensionaler Objekte von der Trägereinrichtung sicherstellen zu können, ist es vorteilhaft, wenn das mindestens eine Ablöseelement elastisch ausgebildet ist. So kann es auf einfache Weise mit einer gewissen Andruckkraft gegen die Trägereinrichtung gedrückt werden. Zudem kann so insbesondere eine gleichmäßige Anlage des Ablöseelements, beispielsweise einer oder mehrerer Klingen desselben an der Trägereinrichtung erreicht werden. Insbesondere können die eine oder mehreren Klingen elastisch ausgebildet sein.

Günstig ist es, wenn das mindestens eine Ablöseelement aus einem Ablöseelementmaterial ausgebildet ist und wenn das Ablöseelementmaterial einen Elastizitätsmodul mit einem Wert in einem Bereich von etwa 100000 MPa bis etwa 250000 MPa aufweist. Insbesondere kann das Ablöseelementmaterial einen Elastizitätsmodul mit einem Wert in einem Bereich von etwa 170000 MPa bis 210000 MPa aufweisen. Ablösematerialien mit derartigen Elastizitätsmodulen sind insbesondere Stähle, die federelastische Eigenschaften aufweisen.

Einfach und sicher lassen sich dreidimensionale Objekte von der Trägereinrichtung ablösen, wenn das mindestens eine Ablöseelement mindestens teilweise, insbesondere die Klinge, aus einem Metall ausgebildet ist. So können insbesondere lange Standzeiten für die Ablöseeinrichtung erreicht werden.

Kostengünstig lässt sich die Ablöseeinrichtung ausbilden, wenn das Metall ein Stahl ist. Insbesondere kann es sich dabei um einen Federstahl handeln. Ein Federstahl hat insbesondere den Vorteil, dass das mindestens eine Ablöseelement mit einer definierten vorspannenden Kraft gegen die Trägereinrichtung gedrückt werden kann.

Vorteilhaft ist es, wenn die Ablöseeinrichtung eine Andrückeinrichtung umfasst zum Andrücken des mindestens einen Ablöseelements gegen die Trägerfläche. Auf diese Weise kann sichergestellt werden, dass die Schneidkante des mindestens einen Ablöseelements bei der Relativbewegung zur Trägerfläche stets sicher an dieser anliegt, um ein definiertes Ablösen des dreidimensionalen Objekts von der Trägereinrichtung zu erreichen.

Auf einfache Weise lässt sich die Andrückeinrichtung ausbilden, wenn diese mindestens ein Andrückelement umfasst zum Andrücken des mindestens einen Ablöseelements gegen die Trägerfläche. Beispielsweise kann die Trägereinrichtung die Andrückeinrichtung umfassen, die mittels eines Antriebs die Trägerfläche gegen das mindestens eine Ablöseelement drückt. Eine vorspannende Kraft kann hier insbesondere eingestellt werden durch einen Verfahrweg der Trägereinrichtung relativ zum mindestens einen Ablöseelement, wenn dieses aus einem elastischen oder flexiblen Material ausgebildet ist.

Vorteilhaft ist es, wenn die Ablöseeinrichtung eine Halteeinrichtung zum Halten des mindestens einen Ablöseelements umfasst. Insbesondere kann die Halteeinrichtung ausgebildet sein, um das mindestens eine Ablöseelement lösbar verbindbar zu halten. Dies ermöglicht es insbesondere, das mindestens eine Ablöseelement auszutauschen, beispielsweise wenn es beschädigt ist, insbesondere wenn eine Schneidkante oder ein Schneidkantenabschnitt desselben stumpf ist oder gebrochen.

Vorzugsweise ist das mindestens eine Ablöseelement in einer Haltestellung an der Halteeinrichtung gehalten und in einer Trennstellung von der Halteeinrichtung getrennt. Diese Ausgestaltung ermöglicht es insbesondere, das Ablöseelement in der beschriebenen Weise bei Bedarf auszutauschen.

Vorteilhafterweise sind die Halteeinrichtung und die Trägereinrichtung relativ zueinander verschiebbar angeordnet. Auf diese Weise kann insbesondere ein an der Halteeinrichtung gehaltenes Ablöseelement relativ zur Trägereinrichtung bewegt werden beziehungsweise die Trägereinrichtung relativ zum mindestens einen Ablöseelement. Insbesondere können die Halteeinrichtung und die Trägereinrichtung relativ zueinander parallel zur Trägerfläche verschiebbar angeordnet sein. Dies ermöglicht es insbesondere, das mindestens eine Ablöseelement parallel zur Trägerfläche zu bewegen beziehungsweise die Trägerfläche parallel zum mindestens einen Ablöseelement, insbesondere einer Schneidkante oder einem Schneidkantenabschnitt desselben.

Die Vorrichtung umfasst eine Schutzeinrichtung zum Schützen der Ablöseeinrichtung, insbesondere in der Baustellung. Gemäß einer bevorzugten Ausführungsform der Erfindung kann vorgesehen sein, dass die Ablöseeinrichtung, insbesondere das mindestens eine Ablöseelement, und die Trägereinrichtung in einer Baustellung, in welcher mindestens ein dreidimensionales Objekt durch Verfestigen, insbesondere schichtweise oder kontinuierlich, des durch Strahlung verfestigbaren Materials ausgebildet wird, außer Eingriff stehen und in einer Ablösestellung, in welcher das mindestens eine dreidimensionale Objekt von der Trägereinrichtung getrennt wird, miteinander in Kontakt stehen. In der beschriebenen Weise können die Ablöseeinrichtung und die Trägereinrichtung zusammenwirken, um das mindestens eine dreidimensionale Objekt von der Trägereinrichtung abzulösen. In der Baustellung kann die Ablöseeinrichtung insbesondere derart zurückgezogen und auch geschützt angeordnet sein, um ein ungehindertes Verfestigen des zu verfestigenden Materials zu ermöglichen zur Ausbildung mindestens eines dreidimensionalen Objekts.

Vorzugsweise umfasst die Schutzeinrichtung mindestens ein Schutzelement zum Schützen des mindestens einen Ablöseelements. Insbesondere kann das mindestens eine Schutzelement ausgebildet sein zum Schützen der Klinge. Auf diese Weise kann eine Verschmutzung oder Beschädigung des mindestens einen Ablöseelements in der Baustellung verhindert oder zumindest eine Gefahr einer Verschmutzung oder Beschädigung verringert werden.

Gemäß einer weiteren bevorzugten Ausführungsform kann vorgesehen sein, dass die Vorrichtung eine Antriebseinrichtung umfasst zum Bewegen der Ablöseeinrichtung und der Trägereinrichtung relativ zueinander. Insbesondere ermöglicht es die Antriebseinrichtung, die Vorrichtung von der Baustellung in die Ablösestellung zu überführen und umgekehrt. Die Antriebseinrichtung kann insbesondere direkt oder indirekt mit der Ablöseeinrichtung und/oder mit der Trägereinrichtung gekoppelt sein, um die Relativbewegung derselben zu ermöglichen. Sie kann auch wahlweise nur mit der Ablöseeinrichtung oder nur mit der Trägereinrichtung gekoppelt sein, um nur die Ablöseeinrichtung oder nur die Trägereinrichtung zu bewegen.

Vorteilhaft ist es, wenn die Antriebseinrichtung mit der Halteeinrichtung zusammenwirkend ausgebildet ist zum Bewegen der Halteeinrichtung relativ zur Vorrichtung. Insbesondere kann die Antriebseinrichtung die Halteeinrichtung relativ zur Trägereinrichtung bewegen.

Vorteilhaft ist es, wenn die mindestens eine Antriebseinrichtung mit der Trägereinrichtung zusammenwirkend ausgebildet ist zum Bewegen der Trägereinrichtung relativ zur Vorrichtung parallel zur Trägerfläche. Beispielsweise kann die Ablöseeinrichtung feststehend, also insbesondere unbeweglich relativ zur Vorrichtung, angeordnet oder ausgebildet sein. Zum Ablösen eines dreidimensionalen Objekts von der Trägereinrichtung kann dann die Trägereinrichtung mittels der mindestens einen Antriebseinrichtung insbesondere relativ zur Ablöseeinrichtung, bewegt werden.

Günstig ist es, wenn die Vorrichtung einen Behälter für das verfestigbare Material umfasst und wenn die Trägereinrichtung in einer Richtung parallel oder im Wesentlichen parallel zur Schwerkraftrichtung und entgegengesetzt oder im Wesentlichen entgegengesetzt zur Schwerkraftrichtung bewegbar angeordnet ist. Diese Ausgestaltung ermöglicht es insbesondere, verfestigbares Material, das im Behälter aufgenommen ist, schichtweise zu verfestigen und so an der Trägereinrichtung dreidimensionale Objekte auszubilden. Die Trägereinrichtung kann dann parallel oder entgegengesetzt parallel zur Schwerkraftrichtung verfahren werden, so dass das dreidimensionale Objekt weiter schichtweise oder kontinuierlich ausgebildet werden kann.

Günstig ist es, wenn die Vorrichtung einen Sammelbehälter für das von der Trägereinrichtung abgelöste dreidimensionale Objekt umfasst. Mit dem Sammelbehälter kann insbesondere verhindert werden, dass das abgelöste dreidimensionale Objekt in den Behälter für das verfestigbare Material nach dem Ablösen von der Trägereinrichtung fallen kann. Der Sammelbehälter kann insbesondere räumlich neben dem Behälter für das verfestigbare Material angeordnet oder ausgebildet sein, insbesondere unterhalb des mindestens einen Ablöseelements, so dass das abgelöste dreidimensionale Objekt von der Trägereinrichtung, die über das mindestens eine Ablöseelement bewegt wird, automatisch in den Sammelbehälter fallen kann.

Damit nicht verfestigtes verfestigbares Material aus dem Sammelbehälter ablaufen kann, ist es günstig, wenn der Sammelbehälter, insbesondere ein Boden desselben, perforiert ist. Diese Ausgestaltung erleichtert insbesondere ein Reinigen des abgelösten dreidimensionalen Objekts von noch nicht verfestigtem verfestigbarem Material.

Um das Ablaufen von nicht verfestigtem verfestigbarem Material aus dem Sammelbehälter zu erleichtern, ist es vorteilhaft, wenn der Sammelbehälter einen bezogen auf die Schwerkraftrichtung geneigten Boden aufweist.

Gemäß einer weiteren bevorzugten Ausführungsform der Erfindung kann vorgesehen sein, dass das mindestens eine Ablöseelement an der Vorrichtung, insbesondere relativ zum Behälter für das verfestigbare Material, unbeweglich angeordnet oder ausgebildet ist und dass die Trägereinrichtung in einer Richtung oder einer Ebene quer zur Schwerkraftrichtung an der Vorrichtung bewegbar angeordnet ist. Das mindestens eine Ablöseelement kann an der Vorrichtung insbesondere räumlich neben dem Behälter für das verfestigbare Material angeordnet sein. Zum Ablösen des dreidimensionalen Objekts von der Trägereinrichtung kann dann die Trägereinrichtung quer zur Schwerkraftrichtung über das Ablöseelement bewegt werden, um das dreidimensionale Objekt abzulösen. Ist das mindestens eine Ablöseelement neben dem Behälter für das verfestigbare Material angeordnet, kann das abgelöste dreidimensionale Objekt nicht in diesen Behälter fallen. Zudem ist es dann einfacher, unterhalb des Ablöseelements einen Sammelbehälter oder eine Fördereinrichtung anzuordnen, um das abgelöste dreidimensionale Objekt aufzufangen und gegebenenfalls weiter zu transportieren.

Ferner kann es vorteilhaft sein, wenn das mindestens eine Ablöseelement an der Vorrichtung bewegbar angeordnet ist in einer Ebene oder Richtung, die quer zur Schwerkraftrichtung verlaufen. Insbesondere dann, wenn die Trägereinrichtung lediglich parallel zur Schwerkraftrichtung und entgegen derselben bewegt werden kann, ist es so möglich, das mindestens eine Ablöseelement an der Trägereinrichtung vorbei zu bewegen, um das an der Trägereinrichtung gehaltene dreidimensionale Objekt abzulösen.

Vorzugsweise ist der Sammelbehälter an der Vorrichtung bewegbar angeordnet in einer Ebene oder Richtung, die quer zur Schwerkraftrichtung verlaufen. Diese Ausgestaltung ist insbesondere dann vorteilhaft, wenn das mindestens eine Ablöseelement an der Vorrichtung ebenfalls bewegbar angeordnet ist in einer Ebene oder Richtung, die quer zur Schwerkraftrichtung verlaufen. Der Sammelbehälter kann dann in eine Position unterhalb der Trägereinrichtung bewegt werden, so dass das mit dem mindestens einen Ablöseelement abgetrennte dreidimensionale Objekt mit dem Sammelbehälter aufgefangen werden kann.

Günstig ist es, wenn der Sammelbehälter synchron oder unabhängig vom mindestens einen Ablöseelement bewegbar angeordnet ist. Eine synchrone Bewegbarkeit hat insbesondere den Vorteil, dass der Sammelbehälter automatisch immer dorthin bewegt wird, beispielsweise gekoppelt mit einer Bewegung des mindestens einen Ablöseelements, wo das dreidimensionale Objekt von der Trägereinrichtung abgelöst wird, so dass das abgelöste dreidimensionale Objekt einfach und sicher im Sammelbehälter aufgefangen werden kann. Eine Bewegbarkeit des Sammelbehälters unabhängig vom mindestens einen Ablöseelement hat insbesondere den Vorteil, dass er nur dann in eine Auffangposition bewegt werden muss, wenn tatsächlich ein dreidimensionales Objekt von der Trägereinrichtung abgelöst wird.

Günstig ist es, wenn der Sammelbehälter bezogen auf die Schwerkraftrichtung unterhalb des mindestens einen Ablöseelements angeordnet oder unterhalb desselben bewegbar angeordnet ist. So können abgelöste dreidimensionale Objekte aufgrund der auf sie wirkenden Schwerkraft direkt in den Sammelbehälter fallen.

Gemäß einer weiteren bevorzugten Ausführungsform der Erfindung kann vorgesehen sein, dass die Vorrichtung eine Fördereinrichtung für das von der Trägereinrichtung abgelöste dreidimensionale Objekt umfasst. Die Fördereinrichtung kann insbesondere in Form eines Förderbands ausgebildet sein oder ein solches umfassen. Mit der Fördereinrichtung lassen sich abgelöste dreidimensionale Objekte insbesondere schnell und einfach weiter transportieren, beispielsweise zu einer Nachbehandlungsvorrichtung in Form einer Nachbelichtungsvorrichtung, mit der die abgelösten dreidimensionalen Objekte vollständig durchgehärtet werden können, falls sie dies noch nicht sind.

Ferner ist es günstig, wenn die Vorrichtung eine Wendeeinrichtung zum Wenden des von der Trägereinrichtung abgelösten dreidimensionalen Objekts umfasst. Beispielsweise kann die Wendeeinrichtung ausgebildet sein, um das im Sammelbehälter aufgefangene dreidimensionale Objekt zu wenden, beispielsweise um 180°. Die Wendeeinrichtung kann insbesondere auch ausgebildet sein, um das auf einer Fördereinrichtung aufgefangene abgelöste dreidimensionale Objekt zu wenden, insbesondere um 180°. Beispielsweise kann die Wendeeinrichtung in Form einer Schwenkklappe ausgebildet sein oder eine solche umfassen, auf die das dreidimensionale abgelöste Objekt nach dem Ablösen von der Trägereinrichtung fällt und welche zum Wenden desselben um eine quer zur Schwerkraftrichtung verlaufende Schwenkachse um einen Winkel von mindestens 90°, vorzugsweise mindestens 120°, verschwenkt oder umgeklappt wird.

Die nachfolgende Beschreibung bevorzugter Ausführungsformen dient im Zusammenhang mit den Zeichnungen der näheren Erläuterung. Es zeigen:
- Figur 1:: eine schematische perspektivische, teilweise durchbrochene Gesamtansicht eines Ausführungsbeispiels einer Vorrichtung zum Herstellen eines dreidimensionalen Objekts;
- Figur 2:: eine perspektivische Ansicht eines Teils der Vorrichtung aus Figur 1 mit in einen Behälter mit verfestigbarem Material eingetauchter Trägerplatte beim Ausbilden eines dreidimensionalen Objekts;
- Figur 3:: eine Ansicht ähnlich Figur 2 mit einem fertiggestellten, an der Trägerplatte gehaltenen dreidimensionalen Objekt;
- Figur 4:: eine weitere perspektivische Ansicht des in den Figuren 2 und 3 dargestellten Teils der Vorrichtung aus Figur 1 beim Ablösen des dreidimensionalen Objekts von der Trägerplatte;
- Figur 5:: eine teilweise geschnittene Ansicht der Anordnung aus den Figuren 2 bis 4 von vorn vor dem Ablösen des dreidimensionalen Objekts von der Trägerplatte;
- Figur 6:: eine vergrößerte Ausschnittsansicht des Bereichs A in Figur 5;
- Figur 7:: eine Ansicht ähnlich Figur 6 mit teilweise von der Trägerplatte abgelöstem dreidimensionalen Objekt;
- Figur 8:: eine Ansicht ähnlich Figur 7 nach vollständigem Ablösen des dreidimensionalen Objekts von der Trägerplatte;
- Figur 9:: eine schematische perspektivische, teilweise durchbrochene Gesamtansicht eines weiteren Ausführungsbeispiels einer Vorrichtung zum Herstellen eines dreidimensionalen Objekts;
- Figur 10:: eine perspektivische Ansicht eines Teils der Vorrichtung aus Figur 9;
- Figur 11:: eine Ansicht der Anordnung aus Figur 10 in Richtung des Pfeils B;
- Figur 12:: eine Ansicht der Anordnung aus Figur 11 in Richtung des Pfeils C;
- Figur 13:: eine vergrößerte Ausschnittsansicht des Bereichs D aus Figur 9;
- Figur 14:: eine Schnittansicht längs Linie 14-14 in Figur 12;
- Figur 15:: eine vergrößerte Teilansicht der Anordnung aus Figur 14 vor dem Abtrennen eines an der Trägerplatte gehaltenen dreidimensionalen Objekts;
- Figur 16:: eine Ansicht ähnlich Figur 15 beim Abtrennen des dreidimensionalen Objekts von der Trägerplatte;
- Figur 17a:: eine schematische Teilschnittansicht eines Ausführungsbeispiels eines Ablöseelements im Zusammenwirken mit einer Trägerplatte vor dem Ablösen eines dreidimensionalen Objekts;
- Figur 17b:: eine Ansicht in Richtung des Pfeils E in Figur 17a;
- Figur 18a:: eine schematische Teilschnittansicht eines weiteren Ausführungsbeispiels eines Ablöseelements im Zusammenwirken mit einer Trägerplatte vor dem Ablösen eines dreidimensionalen Objekts;
- Figur 18b:: eine Ansicht in Richtung des Pfeils F in Figur 18a;
- Figur 19a:: eine schematische Teilschnittansicht eines weiteren Ausführungsbeispiels eines Ablöseelements im Zusammenwirken mit einer Trägerplatte vor dem Ablösen eines dreidimensionalen Objekts;
- Figur 19b:: eine Ansicht in Richtung des Pfeils G in Figur 19a;
- Figur 20a:: eine schematische Teilschnittansicht eines weiteren Ausführungsbeispiels eines Ablöseelements im Zusammenwirken mit einer Trägerplatte vor dem Ablösen eines dreidimensionalen Objekts;
- Figur 20b:: eine Ansicht in Richtung des Pfeils H in Figur 20a;
- Figur 21a:: eine schematische Teilschnittansicht eines weiteren Ausführungsbeispiels einer Ablöseeinrichtung im Zusammenwirken mit einer Trägerplatte vor dem Ablösen eines dreidimensionalen Objekts;
- Figur 21b:: eine Ansicht in Richtung des Pfeils H in Figur 21a; und
- Figur 22:: eine schematische Ansicht eines weiteren Ausführungsbeispiels einer Vorrichtung zum Herstellen eines dreidimensionalen Objekts.

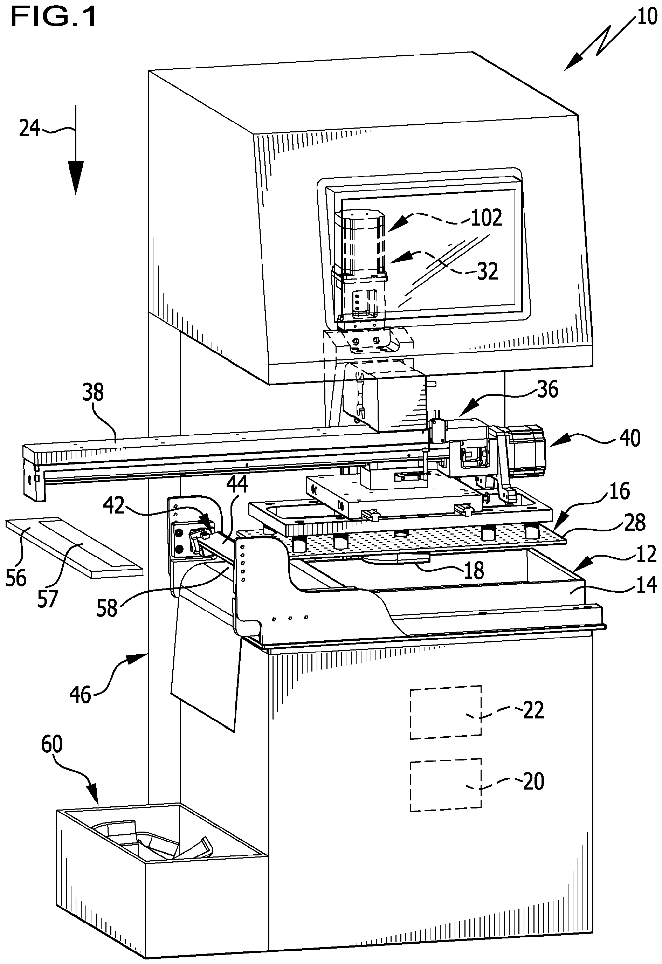

In Figur 1 ist ein erstes Ausführungsbeispiel einer Vorrichtung 10 zum Herstellen dreidimensionaler Objekte durch Verfestigen, insbesondere schichtweise oder kontinuierlich, eines durch Strahlung verfestigbaren Materials dargestellt.

Die Vorrichtung 10 umfasst einen Behälter 12 für das verfestigbare Material. Dieser ist in Form einer flachen Wanne 14 ausgebildet.

Die Vorrichtung 10 umfasst ferner eine Trägereinrichtung 16 zum Halten eines verfestigten dreidimensionalen Objekts 18.

In den Figuren ist das verfestigbare Material der Übersichtlichkeit wegen nicht dargestellt.

Die Vorrichtung 10 umfasst eine in Figur 1 schematisch dargestellte Strahlungsquelle 20 zum Erzeugen von elektromagnetischer Strahlung zum Verfestigen des verfestigbaren Materials. Die Strahlung wird mittels einer Abbildungseinrichtung 22, die in Figur 1 ebenfalls schematisch dargestellt ist, in eine Bauebene abgebildet. Diese verläuft quer zur Schwerkraftrichtung, die durch den Pfeil 24 symbolisiert ist. Die Strahlungsquelle 20 und die Abbildungseinrichtung 22 bilden einen Teil einer Belichtungseinrichtung zum selektiven Belichten der Bauebene.

Ein Boden 26 den Behälters 12 ist strahlungsdurchlässig ausgebildet, so dass die in Schwerkraftrichtung unterhalb des Behälters 12 angeordnete Strahlungsquelle 20 das in der Wanne 14 enthaltene verfestigbare Material von unten durch Beaufschlagung mit Strahlung verfestigen kann.

Die Trägereinrichtung 16 umfasst eine Trägerplatte 28, die eine in Richtung auf die Wanne 14 weisende ebene Trägerfläche 30 definiert.

Die Vorrichtung 10 umfasst eine Antriebseinrichtung 32 zum Verschieben der Trägereinrichtung 16 an einem Haltegestell, um die Trägereinrichtung 16 in einer Richtung parallel oder im Wesentlichen parallel zur Schwerkraftrichtung und entgegengesetzt oder im Wesentlichen entgegengesetzt zur Schwerkraftrichtung zu bewegen.

Die am Haltegestell 34 bewegbar angeordnete Trägereinrichtung 16 umfasst eine quer zur Schwerkraftrichtung orientierte Schlittenanordnung 36 mit einer Führungsschiene 38, die sich quer zur Schwerkraftrichtung erstreckt und zur verschiebbaren Lagerung der Trägerplatte 28 dient. Eine weitere Antriebseinrichtung 40 ermöglicht eine gesteuerte Relativbewegung der Trägerplatte 28 quer zur Schwerkraftrichtung.

Die Vorrichtung 10 umfasst ferner eine Ablöseeinrichtung 42 zum automatischen Ablösen eines an der Trägereinrichtung 16 gehaltenen dreidimensionalen Objekts 18.

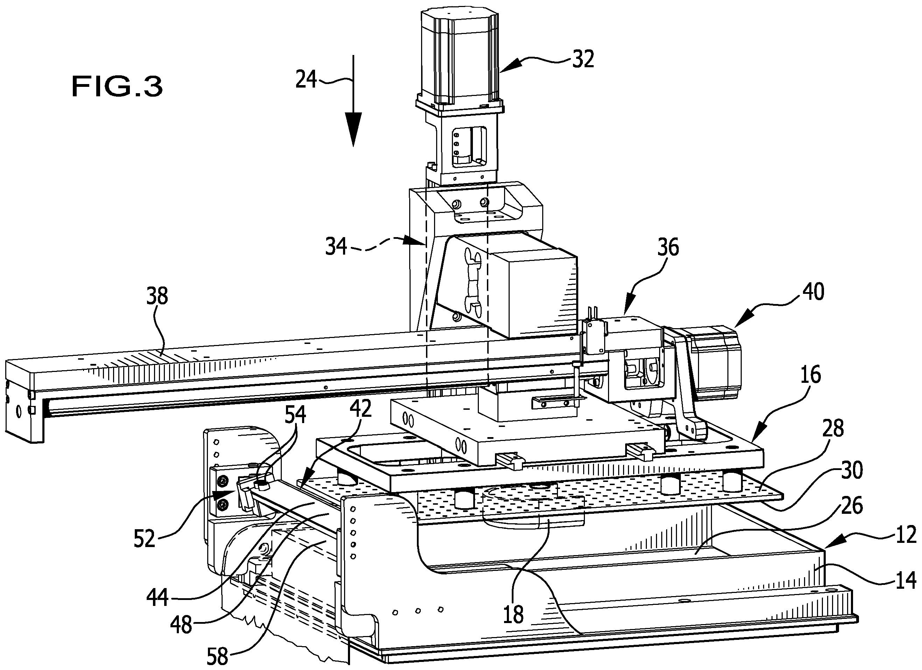

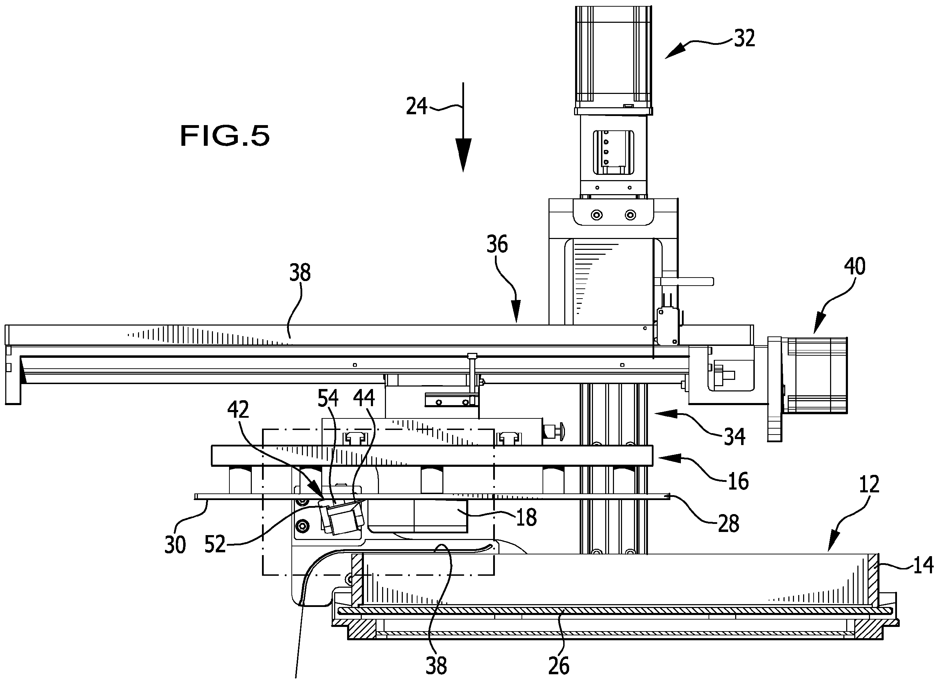

Bei dem in den Figuren 1 bis 8 beispielhaft dargestellten Ausführungsbeispiel einer Vorrichtung 10 umfasst die Ablöseeinrichtung 42 ein Ablöseelement 44. Die Trägereinrichtung 16, nämlich deren die Trägerplatte 28 umfassender Teil, ist relativ zum Ablöseelement 44 bewegbar angeordnet. Dies wird dadurch erreicht, dass das Ablöseelement 44 an einem Rahmen 46 der Vorrichtung 10 unbeweglich befestigt ist. Die Trägerplatte 28 ist relativ zum Rahmen 46 wie oben beschrieben quer zur Schwerkraftrichtung verschiebbar angeordnet.

Das Ablöseelement 44 umfasst eine Klinge 48 mit einer in Richtung auf die Trägerplatte 28 hin weisenden Schneide 50.

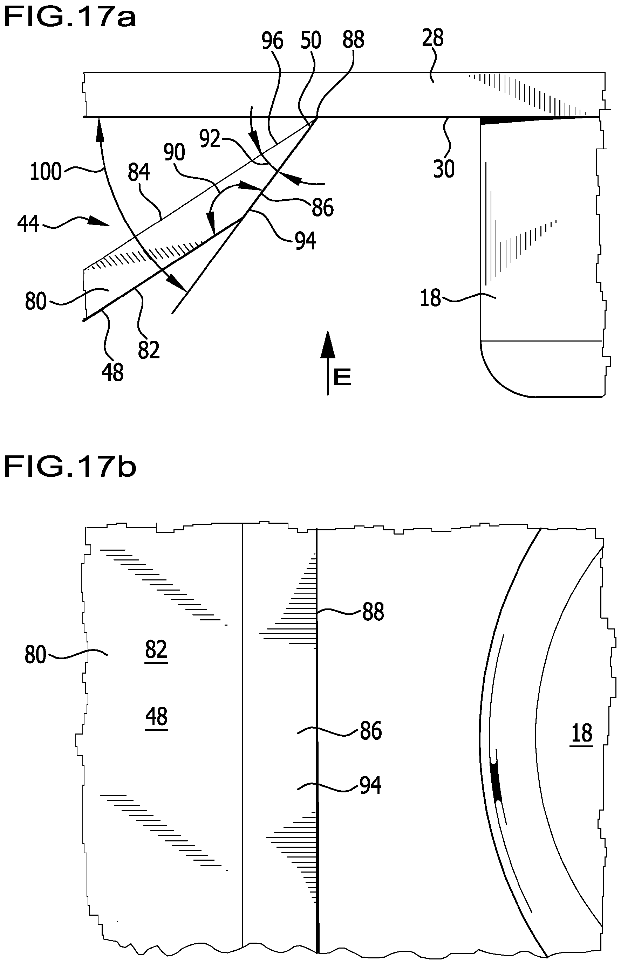

Die Ausgestaltung der Klinge 48 wird später im Zusammenhang mit den Figuren 17a bis 20b im Einzelnen erläutert.

Bei dem in den Figuren 1 bis 8 dargestellten Ausführungsbeispiel der Vorrichtung 10 ist das Ablöseelement 44 in einer Orientierung relativ zur Schwerkraftrichtung ausgerichtet, die nicht veränderbar ist.

Die Ablöseeinrichtung 42 umfasst eine Halteeinrichtung 52 zum Halten des Ablöseelements 44. Das Halteelement 44 ist in einer Haltestellung, wie sie beispielhaft in den Figuren 1 bis 8 dargestellt ist, an der Halteeinrichtung 52 gehalten. In einer Trennstellung, die in den Figuren nicht dargestellt ist, ist das Ablöseelement 44 vollständig von der Halteeinrichtung 52 getrennt.

Das Ablöseelement 44 ist mit Schrauben 54 an der Halteeinrichtung 52 befestigt.

Die Halteeinrichtung 52 ist am Rahmen 46 angeordnet, so dass die die Trägereinrichtung 16 mit ihrem die Trägerplatte 28 umfassenden Teil relativ zur Halteeinrichtung 52 verschiebbar angeordnet ist, und zwar parallel zur Trägerfläche 30.

Die Vorrichtung 10 ist derart ausgebildet, dass die Ablöseeinrichtung 42 mit dem Ablöseelement 44 und die Trägereinrichtung 16 in einer Baustellung, in welcher das Objekt 18 durch Verfestigen des durch Strahlung verfestigbaren Materials ausgebildet wird, außer Eingriff stehen. Beispielhaft zeigen die Figuren 1 bis 3 die Baustellung.

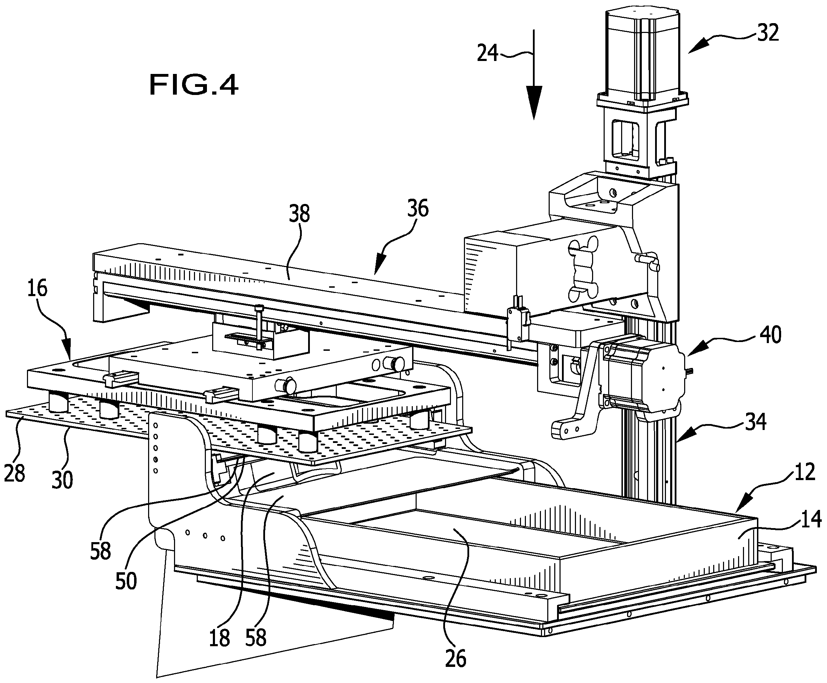

Zum Ablösen des an der Trägerplatte 28 gehaltenen Objekts 18 wird die Ablöseeinrichtung 42 mit dem Ablöseelement 44 in einer Ablösestellung, in welcher das Objekt 18 von der Trägereinrichtung 16, nämlich von der Trägerfläche 30 der Trägerplatte 28 getrennt wird, mit der Trägerplatte 28 in Kontakt gebracht. Die Figuren 4 bis 8 zeigen beispielhaft verschiedene Ablösestellungen, wobei das Ablöseelement 44 an unterschiedlichen Positionen an der Trägerplatte 28 angreift.

Die Vorrichtung 10 umfasst eine Schutzeinrichtung 56, die in Figur 1 schematisch dargestellt ist. Sie dient zum Schützen der Ablöseeinrichtung 42. Insbesondere kann die Schutzeinrichtung 56 in der Baustellung das Ablöseelement 44 überdecken, um insbesondere die Schneide 50 vor Beschädigungen zu schützen.

Die Schutzeinrichtung 56 umfasst bevorzugt ein Schutzelement 57 zum Schützen des Ablöseelements 44, insbesondere zum Schützen der Klinge 48.

Wie beschrieben dient die Antriebseinrichtung 40 zum Bewegen der Ablöseeinrichtung 42 und der Trägereinrichtung 16 mit ihrem die Trägerplatte 28 umfassenden Teil relativ zueinander. Bei dem in den Figuren 1 bis 8 dargestellten Ausführungsbeispiel der Vorrichtung 10 ist die Antriebseinrichtung 40 mit der Trägereinrichtung 16 zusammenwirkend ausgebildet zum Bewegen der Trägereinrichtung 16 mit ihrem die Trägerplatte 28 umfassenden Teil relativ zur Vorrichtung 10, insbesondere relativ zu deren Rahmen 46, parallel zur Trägerfläche 30.

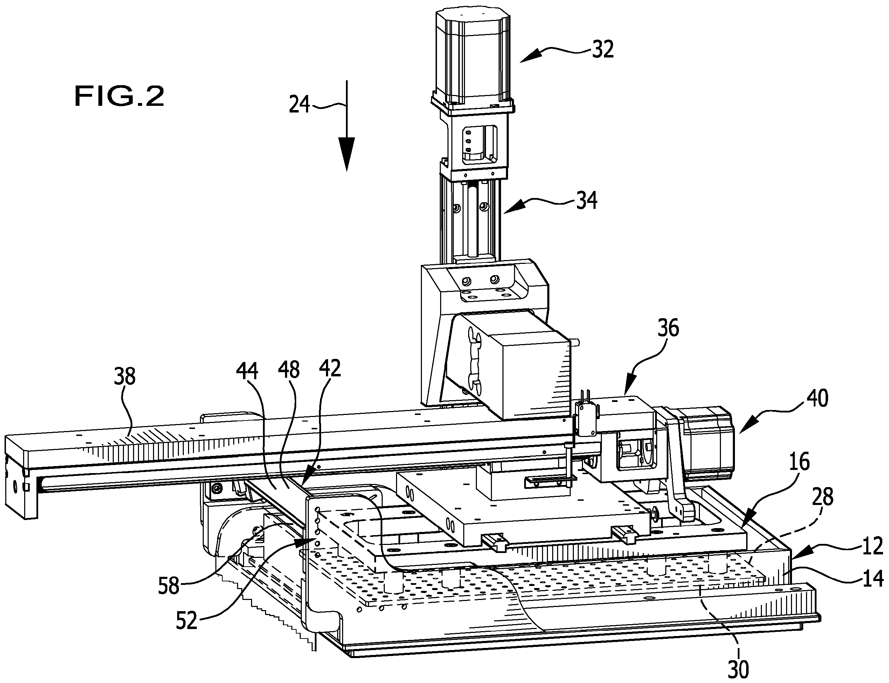

Zum Ausbilden des dreidimensionalen Objekts wird, wie schematisch in Figur 2 dargestellt, die Trägerplatte 28 mittels der Antriebseinrichtung 32 in die Wanne 14 hineinbewegt, bis die Trägerfläche 30 mit verfestigbarem Material in Kontakt steht.

Das verfestigbare Material kann nun mittels der Strahlungsquelle 20 und der Abbildungseinrichtung 22 in gewünschter Weise belichtet werden, und zwar in einer direkt an die Trägerfläche 30 angrenzenden Ebene, also der Bauebene, so dass eine erste Schicht aus verfestigbarem Material direkt an der Trägerfläche 30 der Trägerplatte 28 ausgebildet wird.

Mit der Antriebseinrichtung 32 wird nun die Trägereinrichtung 16 schrittweise oder kontinuierlich aus der Wanne 14 herausbewegt, wobei das verfestigbare Material schichtweise oder kontinuierlich mit Strahlung beaufschlagt wird zum Verfestigen des verfestigbaren Materials zur Ausbildung des Objekts 18.

Ist das Objekt 18 fertiggestellt, wird die Trägereinrichtung 16 mit der Trägerplatte 28 so weit aus der Wanne 14 herausbewegt, dass die Trägerplatte 28 mittels der Antriebseinrichtung 40 parallel zur Trägerfläche 30 in Richtung auf die Ablöseeinrichtung 42 hin verschoben werden kann, bis das Ablöseelement 44 mit der Trägerplatte 28 in Kontakt kommt.

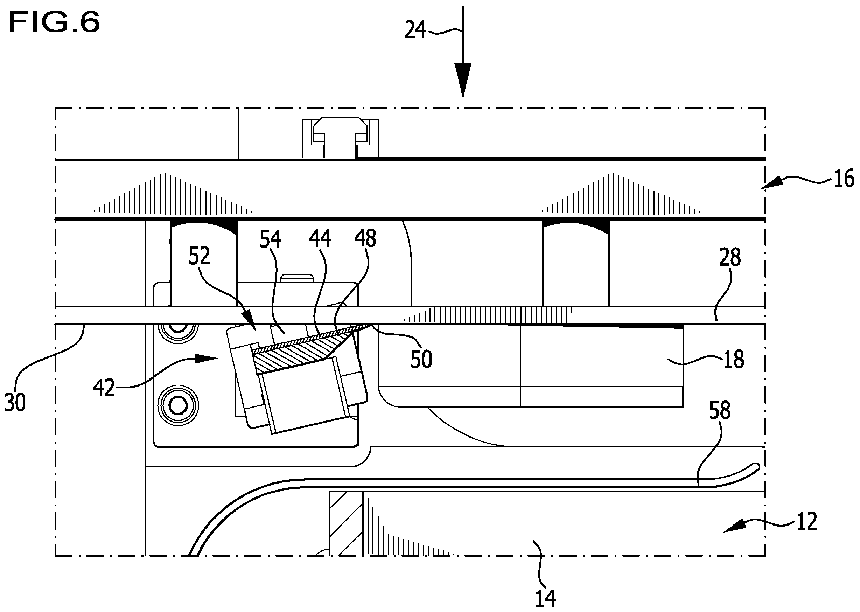

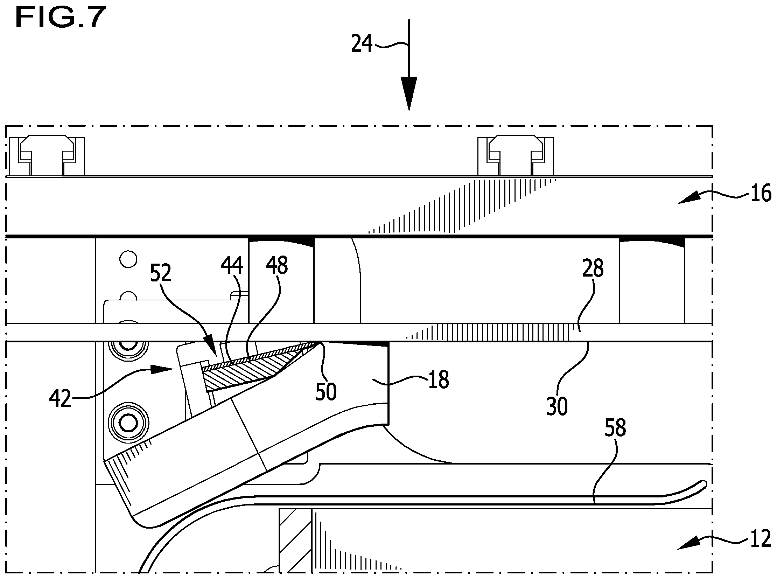

Die Klinge 48 schiebt sich bei fortschreitender Verschiebung der Trägerplatte 28 über das Ablöseelement 44 zwischen das Objekt 18 und die Trägerfläche 30, wie dies schematisch in den Figuren 6 und 7 dargestellt ist.

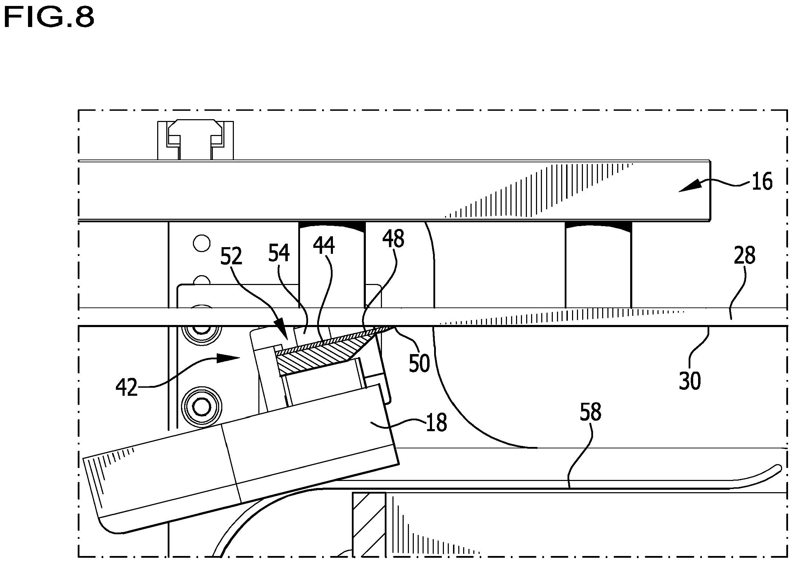

Sobald das Ablöseelemente 44 das Objekt 18 vollständig von der Trägerfläche 30 abgeschält hat, wie dies schematisch in Figur 8 dargestellt ist, fällt das Objekt 18 auf eine Aufprallfläche 58, von wo aus es in einen Auffangbehälter 60 fallen kann.

Die wie beschrieben vom Objekt 18 befreite Trägerplatte 28 kann nun mittels der Antriebseinrichtung 40 wieder zurück in eine Position verfahren werden, von der aus sie mittels der Antriebseinrichtung 32 wieder in den Behälter 12 hineinbewegt werden kann.

Mit der Vorrichtung 10 können somit dreidimensionale Objekte praktisch beliebiger Form hergestellt und automatisch von der Trägereinrichtung 16 abgelöst werden. Dies ermöglicht einen kontinuierlichen Herstellungsprozess. Ein manuelles Ablösen der Objekte 18 von der Trägerplatte 28 ist nicht erforderlich.

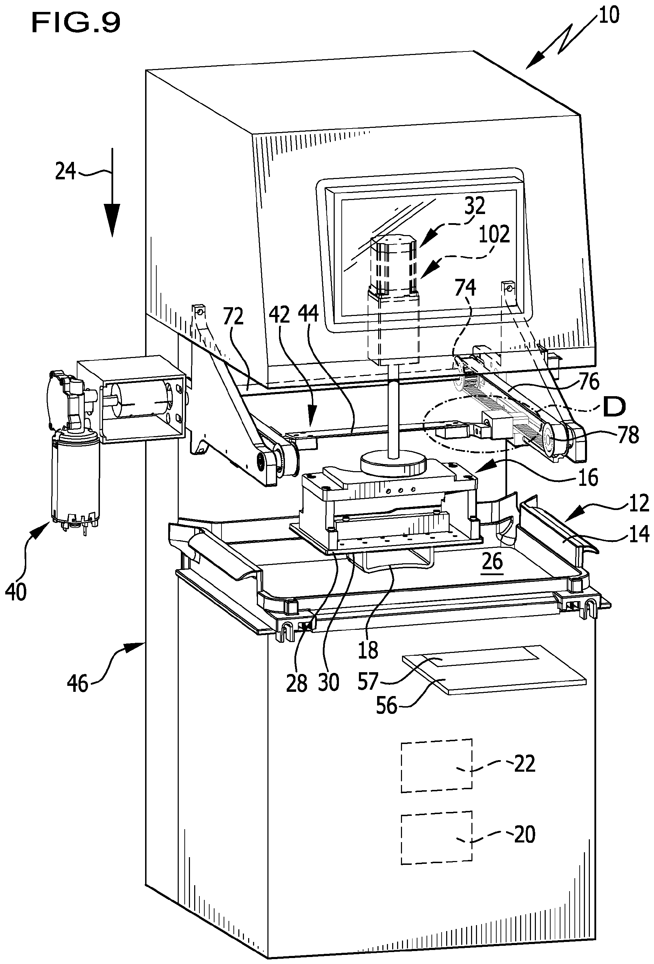

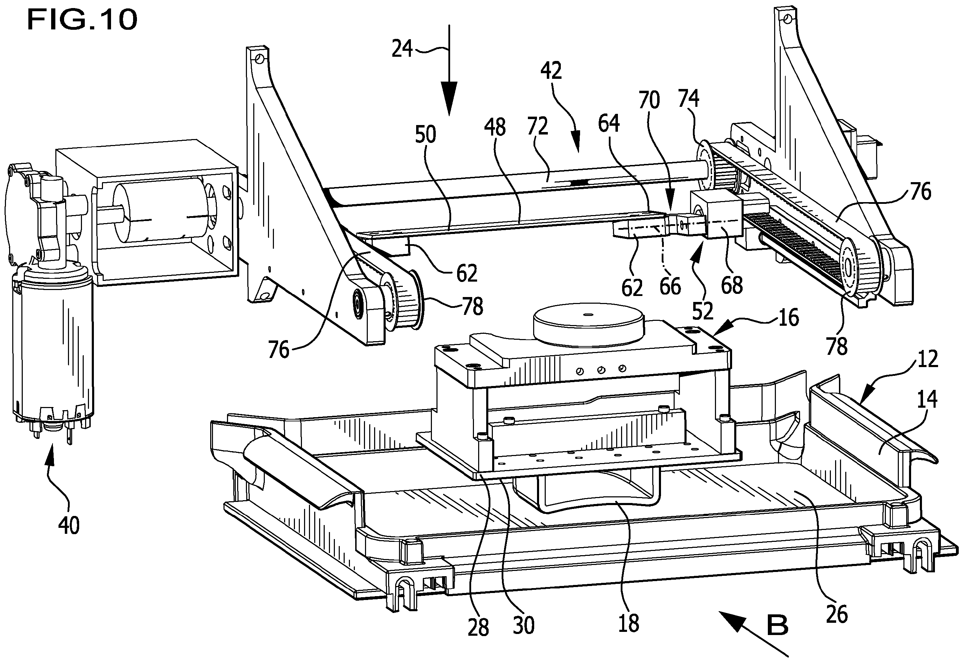

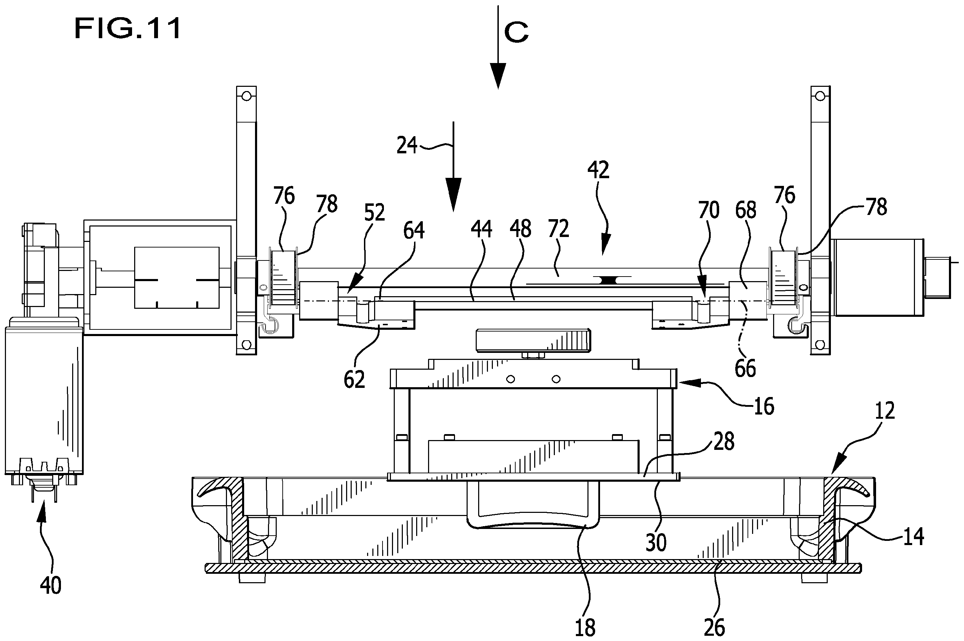

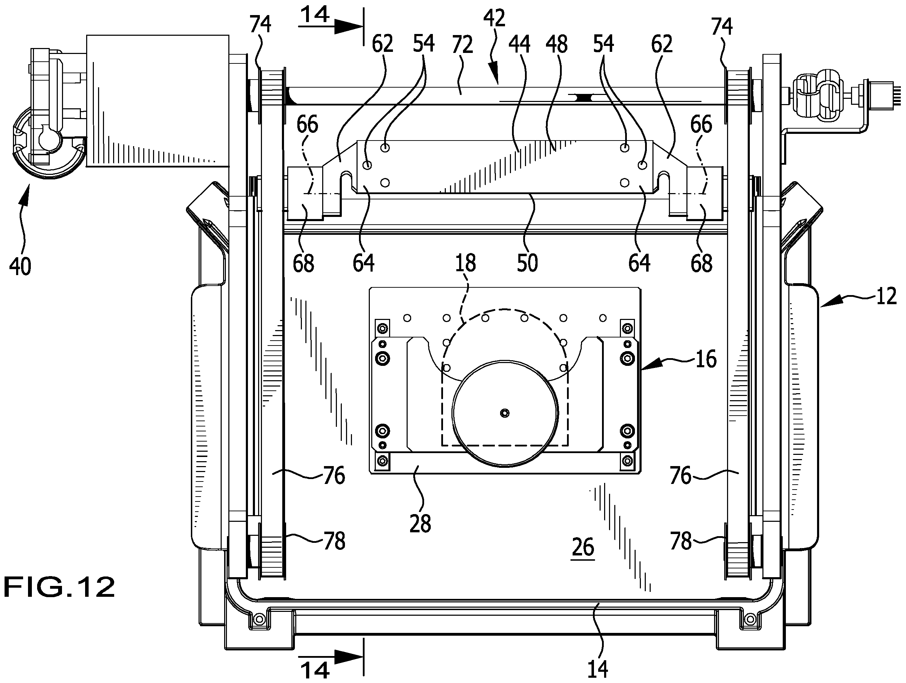

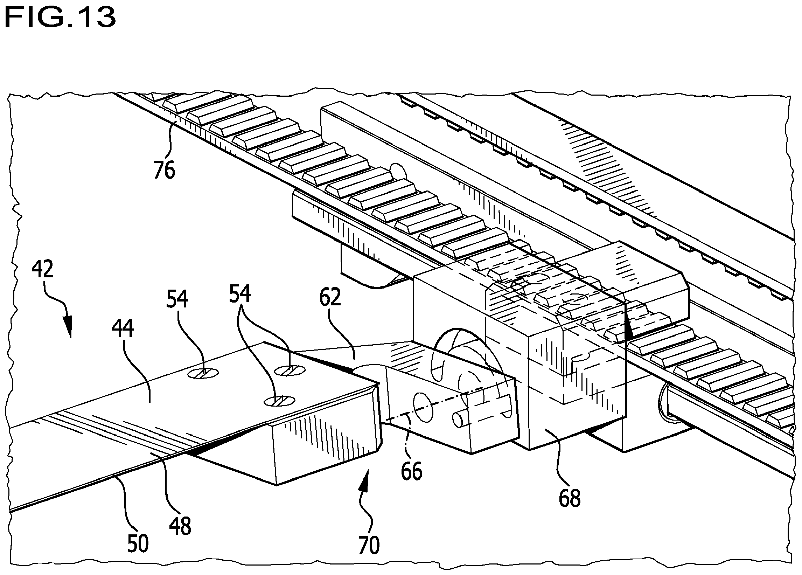

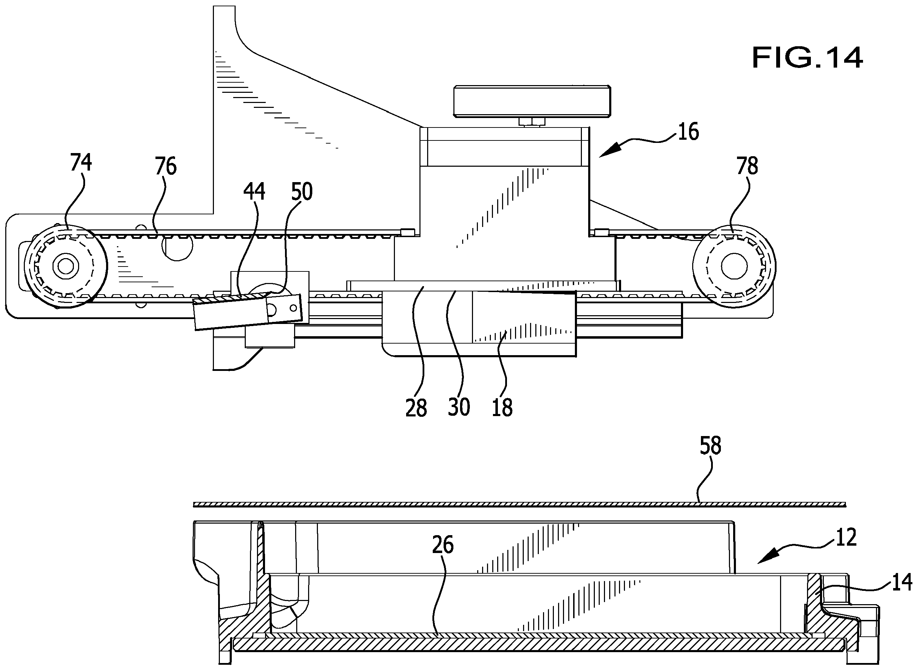

Ein zweites Ausführungsbeispiel einer Vorrichtung 10 zum Herstellen eines dreidimensionalen Objekts 18 durch Verfestigen eines durch Strahlung verfestigbaren Materials ist schematisch in den Figuren 9 bis 16 dargestellt. Identische oder in ihrer Funktion vergleichbare Komponenten sind bei dem in den Figuren 9 bis 16 dargestellten Ausführungsbeispiel mit denselben Bezugszeichen versehen wie bei dem in den Figuren 1 bis 8 dargestellten Ausführungsbeispiel der Vorrichtung 10.

Das weitere Ausführungsbeispiel der Vorrichtung 10 wird nachfolgend im Zusammenhang mit den Figuren 9 bis 16 näher erläutert.

An einem Rahmen 16 ist eine Antriebseinrichtung 32 angeordnet zum Bewegen einer Trägereinrichtung 16 mit einer Trägerplatte 28, die eine in Richtung auf einen Behälter 12 zum Aufnehmen verfestigbaren Materials hin weisenden Trägerfläche 30 umfasst, parallel und entgegengesetzt zur Schwerkraftrichtung, symbolisiert durch den Pfeil 24. Hier kann die Trägerplatte 28 ausschließlich parallel zur Schwerkraftrichtung oder entgegengesetzt zu dieser bewegt werden.

Die Vorrichtung 10 umfasst ebenfalls eine Ablöseeinrichtung 42 mit einem Ablöseelement 44. Das Ablöseelement 44 ist in Form einer Klinge 48 mit einer Schneide 50 ausgebildet.

Das Ablöseelement 44 ist mittels Schrauben 54 an einer Halteeinrichtung 52 auswechselbar befestigt.

Die Halteeinrichtung 52 umfasst zwei voneinander beabstandete Halteelemente 62, an denen jeweils einer von zwei voneinander weg weisenden Endbereichen 64 mit den Schrauben 54 befestigt sind.

Die Halteelemente 62 sind um eine Schwenkachse 66 verschwenkbar jeweils an einem Lagerkörper 68 gehalten.

Die Halteelemente 62 und die mit diesen zusammenwirkenden Lagerkörper 68 bilden zusammen eine Ablösewinkeleinstelleinrichtung 70 zum Einstellen einer Orientierung des Ablöseelements 44 relativ zur Schwerkraftrichtung.

Die Halteeinrichtung 52 ist mit einer Antriebseinrichtung 40 zusammenwirkend ausgebildet. Die Antriebseinrichtung 40 treibt eine Antriebswelle 72 an, auf der zwei Zahnräder 74 voneinander beabstandet und drehfest gehalten sind, so dass sie mit der Antriebseinrichtung 40 synchron in Rotation versetzt werden können. Die Zahnräder 74 dienen zum Antreiben jeweils eines Zahnriemens 76. Die Zahnriemen 76 sind über jeweils ein weiteres Zahnrad 78 gespannt.

Die Lagerkörper 68 sind jeweils an einem der beiden Zahnriemen 76 befestigt, so dass infolge einer Rotation der Antriebswelle 72 die Zahnriemen 76 bewegt und dadurch die Lagerkörper 68 quer zur Schwerkraftrichtung verschoben werden können. Die an der Halteeinrichtung 52 festgelegte Klinge 48 wird dabei dann ebenfalls quer zur Schwerkraftrichtung verschoben.

Zum Ablösen eines dreidimensionalen Objekts 18 von der Trägerplatte 28 wird die Trägereinrichtung 16 mittels der Antriebseinrichtung 32 entgegen der Schwerkraftrichtung aus dem Behälter 12 herausbewegt, und zwar so weit, dass die Trägerfläche 30 auf gleicher Höhe positioniert ist wie die Schneide 50 der Klinge 48.

Das Ablöseelement 44 wird nun mittels der Antriebseinrichtung 40 bewegt, und zwar parallel zur Trägerfläche 30. Die Halteeinrichtung 52 wird auf diese Weise relativ zur Vorrichtung 10, beispielsweise deren Rahmen 46, bewegt.

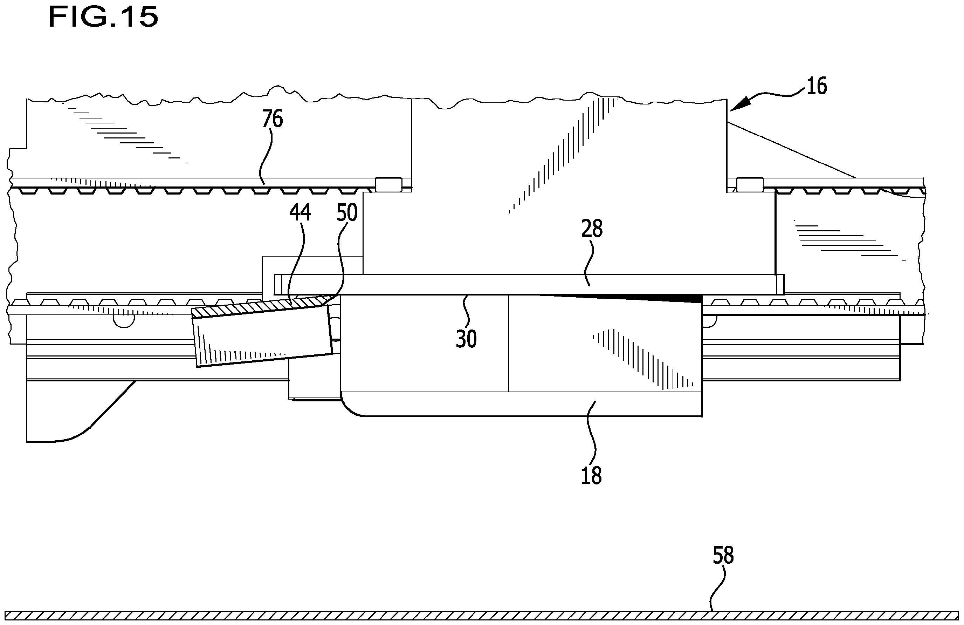

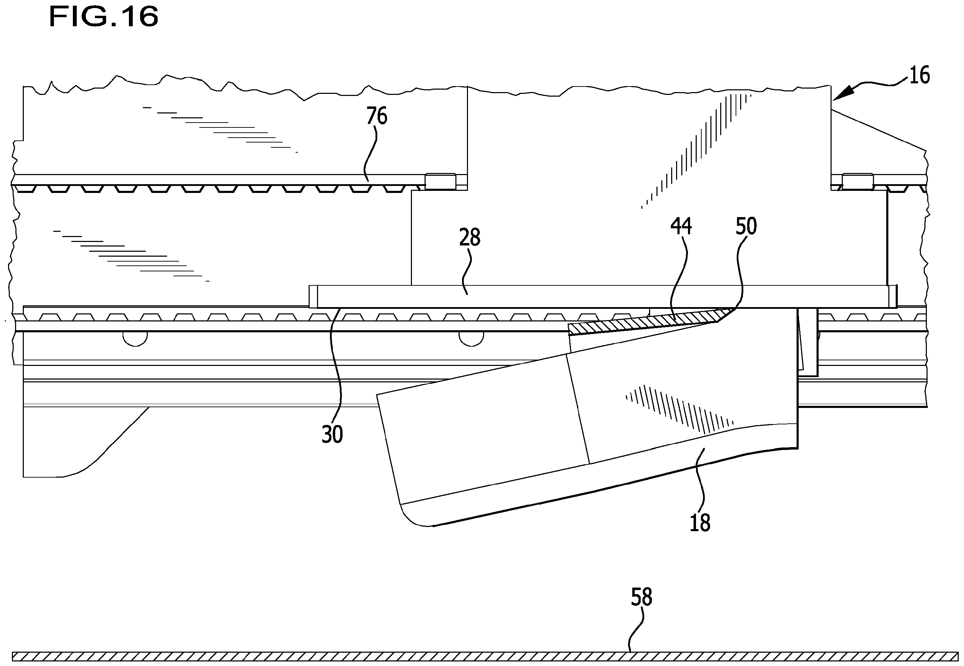

Ausgehend von einer Baustellung, die schematisch in den Figuren 9 bis 12 dargestellt ist, in welcher das Ablöseelement 44 und die Trägereinrichtung 16 außer Eingriff stehen, wird die Halteeinrichtung 52 mit dem Ablöseelement 44 in die Ablösestellung bewegt, in welcher das Objekt 18 von der Trägereinrichtung 16 getrennt wird. Das Ablöseelement 44 steht dabei mit der Trägerfläche 30 in Kontakt. Dies ist schematisch in den Figuren 15 und 16 dargestellt. Die Klinge 48 schiebt sich dabei wiederum zwischen das Objekt 18 und die Trägerfläche 30 und schält das Objekt 18, wie schematisch in Figur 16 dargestellt, von der Trägerplatte 28 ab.

Auch mit der in den Figuren 9 bis 16 schematisch dargestellten Vorrichtung 10 lassen sich dreidimensionale Objekte vollautomatisch herstellen und mittels der Ablöseeinrichtung 42 automatisch von der Trägereinrichtung 16 trennen. Dies ermöglicht einen kontinuierlichen Herstellungsprozess, der vollautomatisiert durchführbar ist.

Im Zusammenhang mit den Figuren 17a bis 20b werden nachfolgend verschiedene Ausführungsbeispiele von Ablöseelementen 44 beschrieben.

In Figur 17a ist ein Ausführungsbeispiel eines Ablöseelements 44 in Form einer Klinge 48 dargestellt. Die Klinge 48 umfasst einen Klingenkörper 80 mit einer Klingenkörpervorderseite 82 und einer Klingenkörperrückseite 84. Der Klingenkörper 80 weist eine bezogen auf die Klingenkörpervorderseite 82 abgeschrägte Seitenfläche 86 auf zur Ausbildung der Schneide 50 mit einer Schneidkante 88.

Die abgeschrägte Seitenfläche 86 schließt mit der Klingenkörpervorderseite 82 einen stumpfen Winkel 90 ein.

Der Klingenkörper 82 weist nur die eine abgeschrägte Seitenfläche 86 auf, die mit der Klingenkörperrückseite 84 einen spitzen Winkel 92 einschließt. Eine Schnittlinie der abgeschrägten Seitenfläche 86 und der Klingenkörperrückseite 84 definiert die Schneidkante 88.

Die Klingenkörpervorderseite 82 und die Klingenkörperrückseite 84 verlaufen parallel zueinander.

Die Schneidkante 88 wird von zwei sich schneidenden, die Schneide 50 begrenzenden Schneidenflächen 94 und 96 definiert, die sich unter einem Schneidenwinkel 98 schneiden. Die beiden Schneidenflächen 94 und 96 werden definiert durch die abgeschrägte Seitenfläche 86 und die Klingenkörperrückseite 84. Daher definiert der spitze Winkel 92 den Schneidenwinkel 98.

Der Schneidenwinkel 98 weist vorzugsweise einen Wert in einem Bereich von 10° bis etwa 50° auf.

Zum Ablösen des Objekts 18 liegt das Ablöseelement 44 mit der Schneidkante 88 an der Trägerfläche 30 der Trägereinrichtung 16 an. Alternativ kann das Ablöseelement 44 auch mit einem geringen Abstand zwischen der Schneidkante 88 und der Trägereinrichtung 16 angeordnet sein.

Das Ablöseelement 44 und die Trägerfläche 30 der Trägereinrichtung 16 schließen einen Ablösewinkel 100 ein. Er wird begrenzt durch die Schneidenfläche 94, die von der Trägerfläche 30 weg weist, und die Trägerfläche 30.

Das in den Figuren 17a und 17b dargestellte Ausführungsbeispiel der Klinge 48 ist derart ausgebildet, dass die abgeschrägte Seitenfläche 86 und die Trägerfläche 30 den Ablösewinkel 100 einschließen.

Sowohl bei diesem Ausführungsbeispiel als auch bei den drei weiteren, nachfolgend noch beschriebenen Ausführungsbeispielen, liegt der Ablösewinkel 100 vorzugsweise in einem Bereich von 0° bis etwa 20°.

Der Ablösewinkel 100 ist bei dem in den Figuren 9 bis 16 dargestellten Ausführungsbeispiel der Vorrichtung 10 einstellbar. Dagegen ist der Ablösewinkel 100 bei dem in den Figuren 1 bis 8 dargestellten Ausführungsbeispiel der Vorrichtung 10 unveränderbar.

Das Ablöseelement 44 ist elastisch ausgebildet.

Das Ablöseelement 44 ist aus einem Ablöseelementmaterial ausgebildet, welches einen Elastizitätsmodul mit einem Wert in einem Bereich von etwa 100000 MPa bis 250000 MPa aufweist.

Das Ablöseelement 44, und zwar die von diesem umfasste Klinge 48, ist aus einem Metall ausgebildet. Das Metall ist ein Stahl, nämlich ein Federstahl.

Die Ablöseeinrichtung 42 umfasst bei beiden beschriebenen Ausführungsbeispielen der Vorrichtung 10 eine Andrückeinrichtung 102 zum Andrücken des Ablöseelements 44 gegen die Trägerfläche 30. Die Andrückeinrichtung 102 umfasst jeweils die Antriebseinrichtung 32, mit der die Trägerplatte 28 gegen das Ablöseelement 44 gedrückt werden kann. Das elastische Ablöseelement 44 wird so mit einer leichten Vorspannung mit der Schneidkante 88 gegen die Trägerfläche 30 gedrückt.

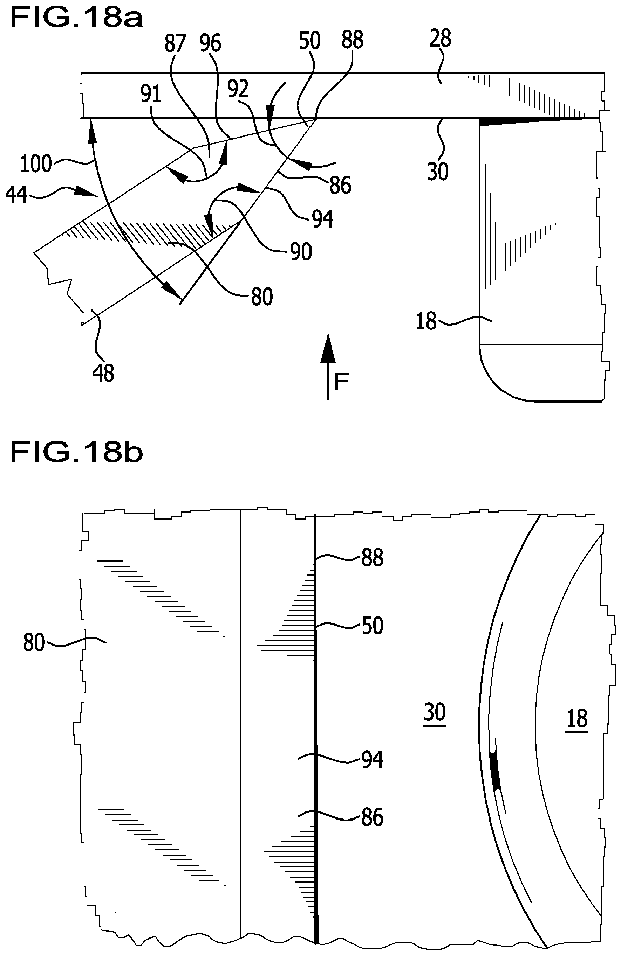

In den Figuren 18a und 18b ist ein weiteres Ausführungsbeispiel eines Ablöseelements 44 in Form einer Klinge 48 dargestellt.

Der Klingenkörper 80 weist hier zwei abgeschrägte Seitenflächen 86 und 87 auf, die die Schneidenflächen 94 und 96 definieren. Die Schneidenflächen 94 und 96 schneiden sich in der Schneidkante 88.

Sowohl die Seitenfläche 86 als auch die Seitenfläche 87 schließen mit der Klingenkörpervorderseite 82 beziehungsweise der Klingenkörperrückseite 84 einen stumpfen Winkel 90 beziehungsweise 91 ein.

Der Ablösewinkel 100 wird wiederum definiert zwischen der Schneidenfläche 94 und der Trägerfläche 30.

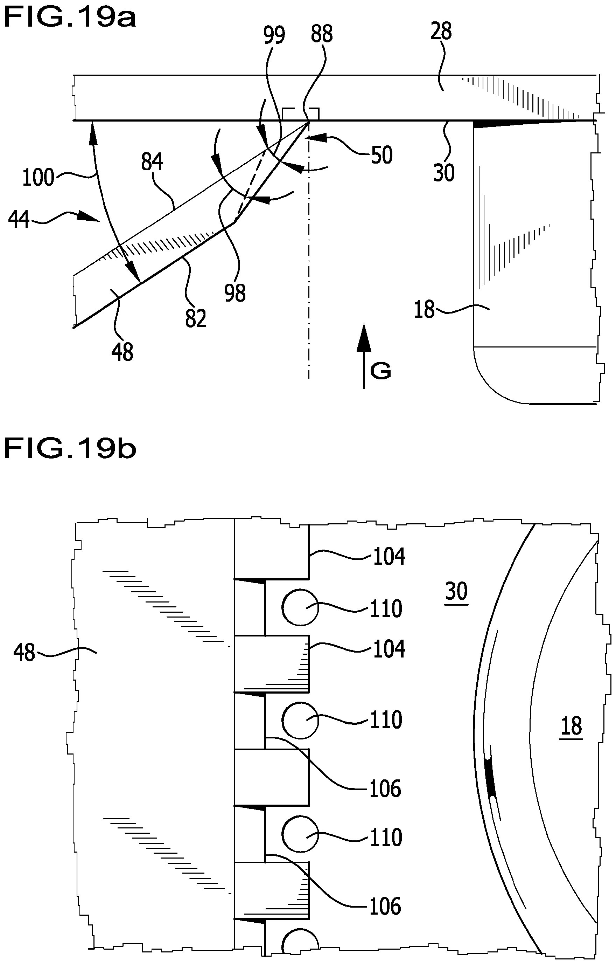

Das in den Figuren 19a und 19b dargestellte Ausführungsbeispiel eines Ablöseelements 44 umfasst eine Schneide 50 mit einer gezahnten Schneidkante 88, die mehrere parallel zueinander versetzt angeordnete Schneidkantenabschnitte 104 und 106 umfasst, die eine gemeinsame Schneidkantenebene 108 definieren. Diese kann parallel zur Trägerfläche 30 verlaufen oder relativ zu dieser geneigt sein. Bei dem in den Figuren 19a und 19b dargestellten Ausführungsbeispiel des Ablöseelements 44 wird die Schneidkantenebene 108 durch die Klingenkörperrückseite 84 definiert.

Die Schneidkante 88 weist vordere Schneidkantenabschnitte 104 und gegenüber diesen zurückgesetzte Schneidkantenabschnitte 106 auf. Ein Schneidenwinkel 98 der vorderen Schneidkantenabschnitte 104 ist kleiner als ein Schneidenwinkel 99 der zurückgesetzten Schneidkantenabschnitte 106.

Die gezahnte Schneidkante 88 wird zum Ablösen des Objekts 18 wie schematisch in Figur 19b dargestellt bevorzugt so positioniert, dass vordere Schneidkantenabschnitte 104 zwischen Durchbrechungen 110 der Trägerplatte 28 eingreifen. Bildet das Objekt 18 in die Durchbrechungen 110 hineinragende Vorsprünge aus, wird das Objekt 18 zunächst mit den Schneidkantenabschnitten 104 etwas angehoben und dann im weiteren mit den die Durchbrechungen 110 überfahrenden Schneidkantenabschnitten 106 weiter von der Trägerfläche 30 abgeschält.

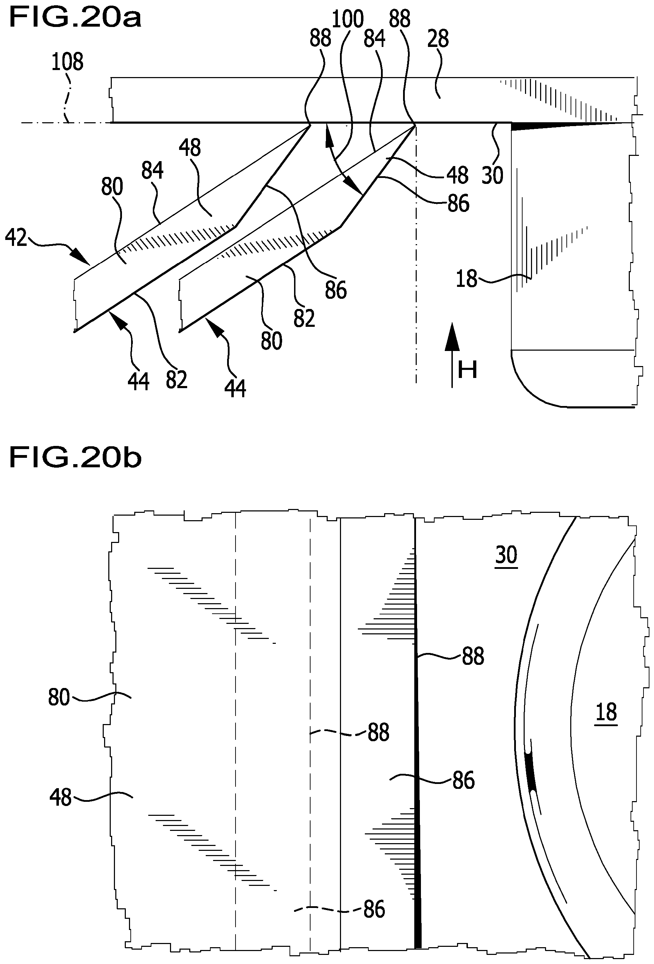

Das in den Figuren 20a und 20b schematisch dargestellte Ausführungsbeispiel einer Ablöseeinrichtung 42 umfasst zwei Ablöseelemente 44. Diese sind etwas voneinander beabstandet angeordnet. Die Ablöseelemente 44 können insbesondere in Form der in den Figuren 17a bis 19b schematisch dargestellten Ausführungsbeispiele von Ablöseelementen 44 ausgebildet sein.

Zum Ablösen des Objekts 18 liegen die Schneidkanten 88 an der Trägerfläche 30 an. Die beiden Schneidkanten 88 definieren eine Schneidkantenebene 108, die von der Trägerfläche 30 definiert wird.

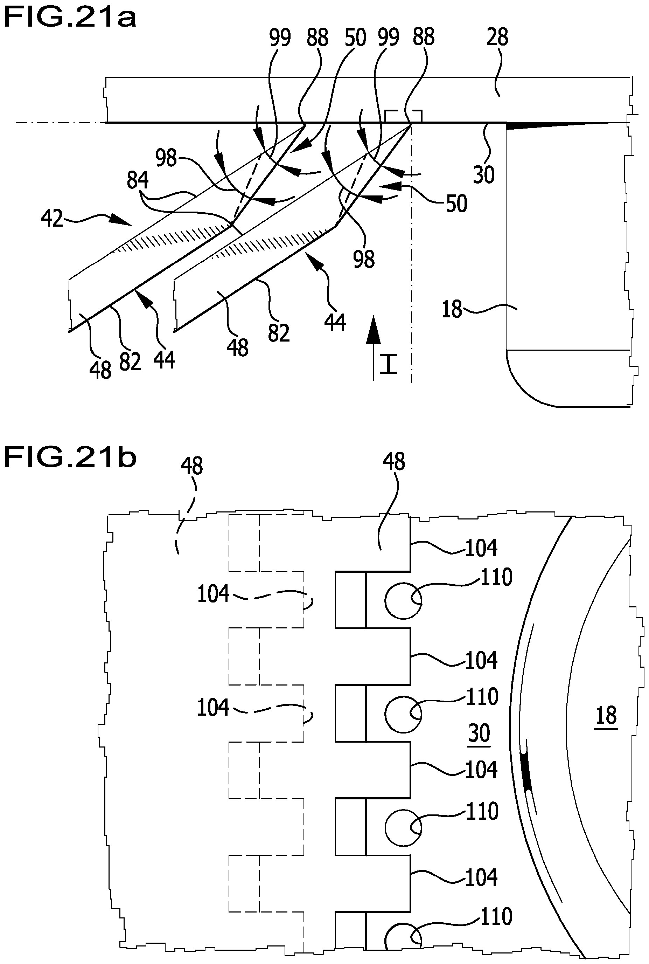

In den Figuren 21a und 21b ist ein Ausführungsbeispiel einer Ablöseeinrichtung 42 mit zwei Ablöseelementen 44 schematisch dargestellt. Die Ablöseelemente 44 sind ausgebildet wie das in den Figuren 19a und 19b dargestellte Ablöseelement 44, welches eine Schneide 50 mit einer gezahnten Schneidkante 88 umfasst. Zur Bezeichnung der Ablöseelemente 44 sind daher in den Figuren 21a und 21b dieselben Bezugszeichen verwendet wie in den Figuren 19a und 19b.

Die beiden Ablöseelemente 44 sind derart angeordnet, dass die vorderen Schneidkantenabschnitte 104 relativ zueinander versetzt angeordnet sind. So kann die gezahnte Schneidkante 88 des vorauseilenden Ablöseelements 44 wie schematisch in Figur 21b dargestellt bevorzugt so positioniert werden, dass deren vordere Schneidkantenabschnitte 104 zwischen den Durchbrechungen 110 der Trägerplatte 28 eingreifen. Bildet das Objekt 18 in die Durchbrechungen 110 hineinragende Vorsprünge aus, wird das Objekt 18 zunächst mit den Schneidkantenabschnitten 104 etwas angehoben und dann im Weiteren mit den die Durchbrechungen 110 überfahrenden Schneidkantenabschnitten 104 des nacheilenden Ablöseelements 44 weiter von der Trägerfläche 30 abgeschält.

Die Klingen 48 der in den Figuren 18a bis 21b dargestellten Ausführungsbeispiele der Ablöseelemente 44 sind aus den oben beschriebenen Ablöseelementmaterialien ausgebildet und weisen die ebenfalls oben beschriebenen Eigenschaften auf.

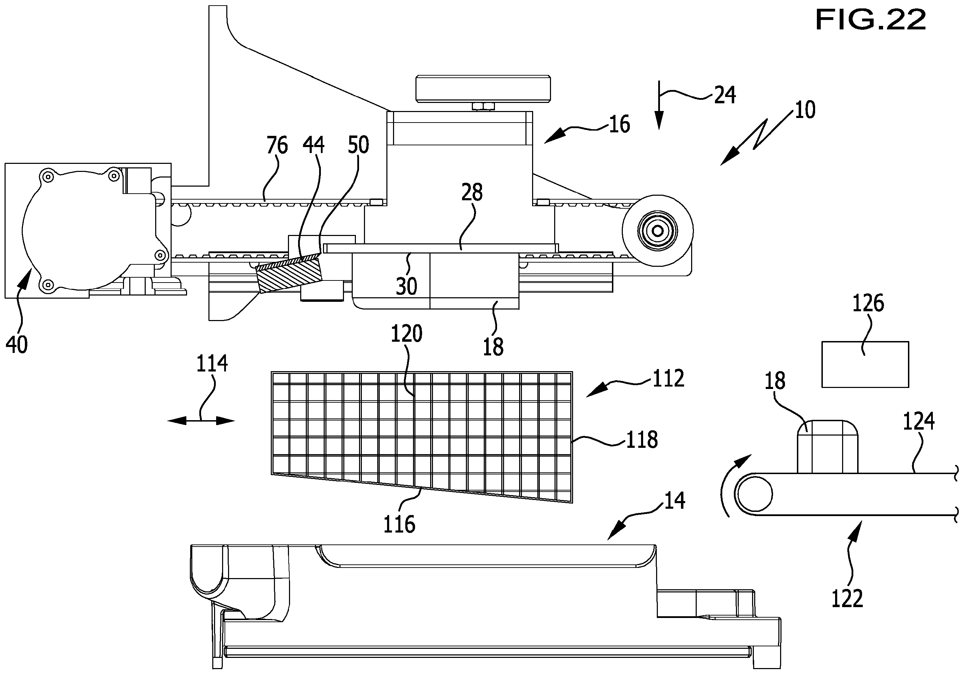

In Figur 22 ist schematisch ein weiteres Ausführungsbeispiel einer Vorrichtung 10 zum Herstellen eines dreidimensionalen Objekts schematisch dargestellt. Das in Figur 22 schematisch dargestellte Ausführungsbeispiel der Vorrichtung 10 stimmt in seinem Aufbau im Wesentlichen mit dem in den Figuren 9 bis 16 dargestellten Ausführungsbeispiel der Vorrichtung 10 überein. Zur Bezeichnung der in Figur 22 dargestellten Elemente sind daher dieselben Bezugszeichen wie in den Figuren 9 bis 16 verwendet.

Zusätzlich ist bei dem Ausführungsbeispiel der Vorrichtung aus Figur 22 ein Sammelbehälter 112 vorgesehen, welcher in einer Richtung beziehungsweise in einer Ebene, die durch den Pfeil 114 symbolisiert ist, quer zur Schwerkraftrichtung 24 bewegbar ist, und zwar unterhalb des Ablöseelements 44, welches ebenfalls quer zur Schwerkraftrichtung 24 bewegbar ist, um ein an der Trägerfläche 30 gehaltenes verfestigtes dreidimensionales Objekt 18 von der Trägerplatte 28 abzulösen.

Der Sammelbehälter 112 weist einen bezogen auf die Schwerkraftrichtung 24 geneigten Boden 116 auf, welcher ebenso wie quer vom Boden 116 entgegen der Schwerkraftrichtung 24 abstehende Behälterwände 118 mit einer Mehrzahl von Durchbrechungen 120 versehen ist. Die Durchbrechungen 120 ermöglichen es, dass noch nicht verfestigtes verfestigbares Material vom Objekt 18, wenn dieses im Sammelbehälter 112 aufgefangen ist, abtropfen und aus dem Sammelbehälter 112 abfließen kann, beispielsweise in die Wanne 14 zurück.

Der Sammelbehälter 112 kann in einer ähnlichen Weise wie das Ablöseelement 44 mit einer nicht dargestellten Antriebseinrichtung, bewegt werden. Beispielsweise kann der Sammelbehälter 112 ebenfalls an einem Zahnriemen gehalten sein, welcher in Figur 22 zum Bewegen des Ablöseelements 44 dargestellt und mit dem Bezugszeichen 76 bezeichnet ist.

Die Vorrichtung 10 kann ferner optional wie in Figur 22 schematisch dargestellt, eine Fördereinrichtung 120 mit einem Förderband 122 umfassen, auf das im Sammelbehälter 112 aufgefangene Objekte 18 entleert werden können. Das Förderband 122 ist dazu in Schwerkraftrichtung 24 unterhalb des verfahrbaren Sammelbehälters 112 angeordnet.

Um die Objekte 18 in eine gewünschte Orientierung zu bringen, kann die Vorrichtung 10 ferner optional eine in Figur 22 schematisch dargestellte Wendeeinrichtung 124 umfassen, um beispielsweise die Objekte 18 um 180° zu wenden. Insbesondere kann die Wendeeinrichtung 124 eine Schwenkklappe umfassen, auf die das Objekt 18 nach dem Ablösen von der Trägereinrichtung 16 fällt und welche zum Wenden des Objekts 18 insbesondere um eine quer zur Schwerkraftrichtung 24 verlaufende Schwenkachse um einen Schwenkwinkel von mindestens 90°, vorzugsweise mindestens 120°, verschwenkt oder umgeklappt werden kann.

Wie bereits erwähnt können die Ablöseelemente 44 der Vorrichtungen 10, wie sie im Zusammenhang mit den Figuren 1 bis 16 und 22 beschrieben wurden, wahlweise in Form eines der in Verbindung mit den Figuren 17a bis 22 beschriebenen Ausführungsbeispiele von Ablöseelementen 44 ausgebildet werden.

### Bezugszeichenliste

- 10: Vorrichtung
- 12: Behälter
- 14: Wanne
- 16: Trägereinrichtung
- 18: Objekt
- 20: Strahlungsquelle
- 22: Abbildungseinrichtung
- 24: Pfeil
- 26: Boden
- 28: Trägerplatte
- 30: Trägerfläche
- 32: Antriebseinrichtung
- 34: Haltegestell
- 36: Schlittenanordnung
- 38: Führungsschiene
- 40: Antriebseinrichtung
- 42: Ablöseeinrichtung
- 44: Ablöseelement
- 46: Rahmen
- 48: Klinge
- 50: Schneide
- 52: Halteeinrichtung
- 54: Schrauben
- 56: Schutzeinrichtung
- 57: Schutzelement
- 58: Aufprallfläche
- 60: Auffangbehälter
- 62: Halteelement
- 64: Endbereich
- 66: Schwenkachse
- 68: Lagerkörper
- 70: Ablösewinkeleinstelleinrichtung
- 72: Antriebswelle
- 74: Zahnrad
- 76: Zahnriemen
- 78: Zahnrad
- 80: Klingenkörper
- 82: Klingenkörpervorderseite
- 84: Klingenkörperrückseite
- 86: Seitenfläche
- 87: Seitenfläche
- 88: Schneidkante
- 90: Winkel
- 91: Winkel
- 92: Winkel
- 94: Schneidenfläche
- 96: Schneidenfläche
- 98: Schneidenwinkel
- 99: Schneidenwinkel
- 100: Ablösewinkel
- 102: Andrückeinrichtung
- 104: Schneidkantenabschnitt
- 106: Schneidkantenabschnitt
- 108: Schneidkantenebene
- 110: Durchbrechung
- 112: Sammelbehälter
- 114: Pfeil
- 116: Boden
- 118: Behälterwand
- 120: Durchbrechung
- 122: Fördereinrichtung
- 124: Förderband
- 126: Wendeeinrichtung

## Patentansprüche

1. Vorrichtung (10) zum Herstellen eines dreidimensionalen Objekts (18) durch Verfestigen, insbesondere schichtweise oder kontinuierlich, eines durch Strahlung verfestigbaren Materials, welche Vorrichtung (10) eine Trägereinrichtung (16) zum Halten des verfestigten dreidimensionalen Objekts (18) umfasst, wobei die Vorrichtung (10) eine Ablöseeinrichtung (42) umfasst zum automatischen Ablösen eines an der Trägereinrichtung (16) gehaltenen dreidimensionalen Objekts (18), **dadurch gekennzeichnet, dass** die Vorrichtung (10) eine Schutzeinrichtung (56) umfasst zum Schützen der Ablöseeinrichtung (42).

2. Vorrichtung nach Anspruch 1, **dadurch gekennzeichnet, dass** die Ablöseeinrichtung (42) mindestens ein Ablöseelement (44) umfasst und dass das mindestens eine Ablöseelement (44) und die Trägereinrichtung (16) relativ zueinander bewegbar angeordnet oder ausgebildet sind,
wobei insbesondere das mindestens eine Ablöseelement (44) an der Vorrichtung (10)
a) unbeweglich angeordnet oder ausgebildet ist und die Trägereinrichtung (16) in einer Richtung oder einer Ebene quer zur Schwerkraftrichtung (24) an der Vorrichtung (10) bewegbar angeordnet ist oder
b) bewegbar angeordnet ist in einer Ebene oder Richtung, die quer zur Schwerkraftrichtung (24) verlaufen.

3. Vorrichtung nach Anspruch 2, **dadurch gekennzeichnet, dass** das mindestens eine Ablöseelement (44) und eine von der Trägereinrichtung (16) definierte Trägerfläche (30), auf der das dreidimensionale Objekt (18) gehalten ist, einen Ablösewinkel (100) einschließen,
wobei insbesondere
a) eine der beiden Schneidenflächen (94, 96) von der Trägerfläche (30) weg weist und diese Schneidenfläche (94) und die Trägerfläche (30) den Ablösewinkel (100) zwischen sich einschließen
und/oder
b) die abgeschrägte, von der Trägerfläche (30) weg weisende Seitenfläche (86) und die Trägerfläche (30) den Ablösewinkel (100) einschließen
und/oder
c) der Ablösewinkel (100) einen Wert in einem Bereich von 0° bis etwa 20° aufweist, insbesondere in einem Bereich von 0° bis etwa 10°,
und/oder
d) die Vorrichtung (10) eine Ablösewinkeleinstelleinrichtung umfasst zum Einstellen des Ablösewinkels (100)
oder
der Ablösewinkel (100) unveränderbar ist.

4. Vorrichtung nach Anspruch 2 oder 3, **dadurch gekennzeichnet, dass** das mindestens eine Ablöseelement (44) eine Klinge (48) mit einer Schneide (50) umfasst oder dass das mindestens eine Ablöseelement (44) in Form einer Klinge (48) mit mindestens einer Schneide (50) ausgebildet ist.

5. Vorrichtung nach Anspruch 4, **dadurch gekennzeichnet, dass** die Klinge (48) einen Klingenkörper (80) mit einer Klingenkörpervorderseite (82) und einer Klingenkörperrückseite (84) aufweist und dass der Klingenkörper (80) mindestens eine bezogen auf die Klingenkörpervorderseite (82) und/oder die Klingenkörperrückseite abgeschrägte Seitenfläche (86) aufweist zur Ausbildung der Schneide (50) mit einer Schneidkante (88), wobei insbesondere
a) die mindestens eine abgeschrägte Seitenfläche (86) mit der Klingenkörpervorderseite (82) einen stumpfen Winkel (90) einschließt
und/oder
b) der Klingenkörper (80) zwei abgeschrägte Seitenflächen (86, 87) zur Ausbildung der Schneide (50) aufweist und eine Schnittlinie der zwei abgeschrägten Seitenflächen (86, 87) die Schneidkante (88) definiert, wobei insbesondere die mindestens eine abgeschrägte Seitenfläche (87) mit der Klingenkörperrückseite (84) einen stumpfen Winkel (91) einschließt,
oder
der Klingenkörper (82) nur eine abgeschrägte Seitenfläche (86) aufweist, die mit der Klingenkörperrückseite (84) einen spitzen Winkel (92) einschließt, und eine Schnittlinie der abgeschrägten Seitenfläche (86) mit der Klingenkörperrückseite (84) die Schneidkante (88) definiert
und/oder
c) die Klingenkörpervorderseite (82) und die Klingenkörperrückseite (84) parallel zueinander verlaufen
und/oder
d) die Schneidkante (88) von zwei sich schneidenden, die Schneide (50) begrenzenden Schneidenflächen (94, 96) definiert wird, die sich unter einem Schneidenwinkel (98) schneiden, und der Schneidenwinkel (98) einen Wert in einem Bereich von etwa 10° bis etwa 50° aufweist, insbesondere einen Wert in einem Bereich von etwa 20° bis etwa 40°,
und/oder
e) das mindestens eine Ablöseelement (44) zum und beim Ablösen des dreidimensionalen Objekts (18) mit der Schneidkante (88) an der Trägereinrichtung (16) anliegt oder mit einem geringen Abstand von der Trägereinrichtung (16) angeordnet ist.

6. Vorrichtung nach einem der Ansprüche 2 bis 5, **dadurch gekennzeichnet, dass** die Ablöseeinrichtung (42) zwei Ablöseelemente (44) umfasst, die voneinander beabstandet angeordnet sind,
wobei insbesondere die beiden Schneidkanten (88) der beiden Ablöseelemente (44) voneinander beabstandet angeordnet sind und die beiden Schneidkanten (88) eine Schneidkantenebene (108) definieren, die parallel oder im Wesentlichen parallel zur Trägerfläche (30) verläuft.

7. Vorrichtung nach einem der Ansprüche 4 bis 6, **dadurch gekennzeichnet, dass** die Schneide (50) eine gezahnte Schneidkante (88) umfasst mit mehreren parallel zueinander versetzt angeordneten Schneidkantenabschnitten (104, 106) und dass die Schneidkantenabschnitte (104, 106) eine gemeinsame Schneidkantenebene (108) definieren, die parallel oder im Wesentlichen parallel zur Trägerfläche (30) verläuft,
wobei insbesondere die Schneidkante (88) vordere Schneidkantenabschnitte (104) und gegenüber diesen zurückgesetzte Schneidkantenabschnitte (106) aufweist und ein Schneidenwinkel (98) der vorderen Schneidkantenabschnitte (104) kleiner ist als ein Schneidwinkel (99) der zurückgesetzten Schneidkantenabschnitte (106).

8. Vorrichtung nach einem der Ansprüche 2 bis 7, **dadurch gekennzeichnet, dass** das mindestens eine Ablöseelement (44)
a) elastisch ausgebildet ist
und/oder
b) aus einem Ablöseelementmaterial ausgebildet ist und dass das Ablöseelementmaterial einen Elastizitätsmodul mit einem Wert in einem Bereich von etwa 100000 MPa bis etwa 250000 MPa aufweist, insbesondere in einem Bereich von etwa 170000 MPa bis etwa 210000 MPa,
und/oder
c) mindestens teilweise, insbesondere die Klinge (48), aus einem Metall ausgebildet ist,
wobei insbesondere das Metall ein Stahl ist, insbesondere ein Federstahl.

9. Vorrichtung nach einem der Ansprüche 2 bis 8, **dadurch gekennzeichnet, dass** die Ablöseeinrichtung (42) eine Andrückeinrichtung (102) umfasst zum Andrücken des mindestens einen Ablöseelement (44) gegen die Trägerfläche (30),
wobei insbesondere die Andrückeinrichtung (102) mindestens ein Andrückelement umfasst zum Andrücken des mindestens einen Ablöseelement (44) gegen die Trägerfläche (30).

10. Vorrichtung nach einem der voranstehenden Ansprüche, **dadurch gekennzeichnet, dass** die Ablöseeinrichtung (42) eine Halteeinrichtung (52) zum Halten des mindestens einen Ablöseelements (44) umfasst, wobei insbesondere
a) das mindestens eine Ablöseelement (44) in einer Haltestellung an der Halteeinrichtung (52) gehalten und in einer Trennstellung von der Halteeinrichtung (52) getrennt ist
und/oder
b) die Halteeinrichtung (52) und die Trägereinrichtung (16) relativ zueinander verschiebbar angeordnet sind, insbesondere parallel zur Trägerfläche (30).

11. Vorrichtung nach einem der voranstehenden Ansprüche, **dadurch gekennzeichnet, dass** die Ablöseeinrichtung (42), insbesondere das mindestens eine Ablöseelement (44), und die Trägereinrichtung (16) in einer Baustellung, in welcher mindestens ein dreidimensionales Objekt (18) durch Verfestigen, insbesondere schichtweise oder kontinuierlich, des durch Strahlung verfestigbaren Materials ausgebildet wird, außer Eingriff stehen und in einer Ablösestellung, in welcher das mindestens eine dreidimensionale Objekt (18) von der Trägereinrichtung (16) getrennt wird, miteinander in Kontakt stehen.

12. Vorrichtung nach einem der voranstehenden Ansprüche, **dadurch gekennzeichnet, dass** die Schutzeinrichtung (56)
a) ausgebildet ist zum Schützen der Ablöseeinrichtung (42) in der Baustellung
und/oder
b) mindestens ein Schutzelement (58) zum Schützen des mindestens einen Ablöseelements (44) umfasst, insbesondere zum Schützen der Klinge (48).

13. Vorrichtung nach einem der voranstehenden Ansprüche, **dadurch gekennzeichnet, dass** die Vorrichtung (10) mindestens eine Antriebseinrichtung (40) umfasst zum Bewegen der Ablöseeinrichtung (42) und der Trägereinrichtung (16) relativ zueinander,
wobei insbesondere die mindestens eine Antriebseinrichtung (40)
a) mit der Halteeinrichtung (52) zusammenwirkend ausgebildet ist zum Bewegen der Halteeinrichtung (52) relativ zur Vorrichtung (10)
und/oder
b) mit der Trägereinrichtung (16) zusammenwirkend ausgebildet ist zum Bewegen der Trägereinrichtung (16) relativ zur Vorrichtung (10) parallel zu Trägerfläche (30).

14. Vorrichtung nach einem der voranstehenden Ansprüche, **dadurch gekennzeichnet, dass** die Vorrichtung (10)
a) einen Behälter (12) für das verfestigbare Material umfasst und dass die Trägereinrichtung (16) in einer Richtung parallel oder im Wesentlichen parallel zur Schwerkraftrichtung (24) und entgegengesetzt oder im Wesentlichen entgegengesetzt zur Schwerkraftrichtung (24) bewegbar angeordnet ist,
wobei insbesondere die Ablöseeinrichtung (42) mindestens ein Ablöseelement (44) umfasst, wobei das mindestens eine Ablöseelement (44) an der Vorrichtung (10) relativ zum Behälter (12) unbeweglich angeordnet oder ausgebildet ist und wobei die Trägereinrichtung (16) in einer Richtung oder einer Ebene quer zur Schwerkraftrichtung (24) an der Vorrichtung (10) bewegbar angeordnet ist,
und/oder
b) einen Sammelbehälter (112) für das von der Trägereinrichtung (16) abgelöste dreidimensionale Objekt (18) umfasst,
wobei insbesondere
- der Sammelbehälter (112), insbesondere ein Boden (116) desselben, perforiert ist
und/oder
- der Sammelbehälter (112) einen bezogen auf die Schwerkraftrichtung (24) geneigten Boden (116) aufweist
und/oder
- der Sammelbehälter (112) an der Vorrichtung (10) bewegbar angeordnet ist in einer Ebene oder Richtung, die quer zur Schwerkraftrichtung (24) verlaufen
und/oder
- die Ablöseeinrichtung (42) mindestens ein Ablöseelement (44) umfasst und der Sammelbehälter synchron oder unabhängig vom mindestens einen Ablöseelement (44) bewegbar angeordnet ist.

15. Vorrichtung nach einem der voranstehenden Ansprüche, **dadurch gekennzeichnet, dass** die Vorrichtung (10)
a) eine Fördereinrichtung, insbesondere in Form eines Förderbands, für das von der Trägereinrichtung (16) abgelöste dreidimensionale Objekt (18) umfasst
und/oder
b) eine Wendeeinrichtung zum Wenden des von der Trägereinrichtung (16) abgelösten dreidimensionalen Objekts (18) umfasst.

## Claims

1. Apparatus (10) for manufacturing a three-dimensional object (18) by solidifying, in particular in layers or continuously, a material that is solidifiable by radiation, which apparatus (10) comprises a support device (16) for holding the solidified three-dimensional object (18), wherein the apparatus (10) comprises a detaching device (42) for automatically detaching a three-dimensional object (18) held on the support device (16), **characterized in that** the apparatus (10) comprises a protective device (56) for protecting the detaching device (42).

2. Apparatus in accordance with Claim 1, **characterized in that** the detaching device (42) comprises at least one detaching element (44), and **in that** the at least one detaching element (44) and the support device (16) are arranged or formed so as to be moveable relative to one another,
wherein, in particular, the at least one detaching element (44) is arranged or formed on the apparatus (10)
a) so as to be immobile and the support device (16) is arranged on the apparatus (10) so as to be moveable in a direction or a plane transverse to the direction of gravity (24)
or
b) so as to be moveable in a plane or direction that extend transversely to the direction of gravity (24).

3. Apparatus in accordance with Claim 2, **characterized in that** the at least one detaching element (44) and a support face (30), defined by the support device (16), on which the three-dimensional object (18) is held form a detaching angle (100),
wherein, in particular,
a) one of the two cutting faces (94, 96) faces away from the support face (30), and this cutting face (94) and the support face (30) form between them the detaching angle (100),
and/or
b) the beveled side face (86) facing away from the support face (30) and the support face (30) form the detaching angle (100),
and/or
c) the detaching angle (100) has a value in a range from about 0° to about 20°, in particular in a range from about 0° to about 10°,
and/or
d) the apparatus (10) comprises a detaching angle setting device for setting the detaching angle (100)
or
the detaching angle (100) is unchangeable.

4. Apparatus in accordance with Claim 2 or 3, **characterized in that** the at least one detaching element (44) comprises a blade (48) with a cutter (50), or **in that** the at least one detaching element (44) is configured in the form of a blade (48) with at least one cutter (50).

5. Apparatus in accordance with Claim 4, **characterized in that** the blade (48) has a blade body (80) with a blade body front side (82) and a blade body rear side (84), and **in that** the blade body (80) has at least one side face (86) that is beveled in relation to the blade body front side (82) and/or the blade body rear side for forming the cutter (50) with a cutting edge (88),
wherein, in particular,
a) the at least one beveled side face (86) forms an obtuse angle (90) with the blade body front side (82),
and/or
b) the blade body (80) has two beveled side faces (86, 87) for forming the cutter (50), and a line of intersection of the two beveled side faces (86, 87) defines the cutting edge (88), wherein, in particular, the at least one beveled side face (87) forms an obtuse angle (91) with the blade body rear side (84)
or the blade body (82) has only one beveled side face (86), which forms an acute angle (92) with the blade body rear side (84), and a line of intersection of the beveled side face (86) with the blade body rear side (84) defines with the cutting edge (88),
and/or
c) the blade body front side (82) and the blade body rear side (84) extend in parallel to one another,
and/or
d) the cutting edge (88) is defined by two intersecting cutting faces (94, 96) that delimit the blade (50) and intersect at a cutting angle (98), and the cutting angle (98) has a value in a range from about 10° to about 50°, in particular a value in a range from about 20° to about 40°,
and/or
e) the at least one detaching element (44), for and when detaching the three-dimensional object (18), abuts with the cutting edge (88) against the support device (16) or is arranged at a small distance from the support device (16).

6. Apparatus in accordance with any one of Claims 2 to 5, **characterized in that** the detaching device (42) comprises two detaching elements (44), which are arranged at a distance from one another,
wherein, in particular, the two cutting edges (88) of the two detaching elements (44) are arranged at a distance from one another, and the two cutting edges (88) define a cutting edge plane (108), which extends in parallel or substantially in parallel to the support face (30).

7. Apparatus in accordance with any one of Claims 4 to 6, **characterized in that** the cutter (50) comprises a serrated cutting edge (88) with a plurality of cutting edge portions (104, 106) arranged offset in parallel to one another, and **in that** the cutting edge portions (104, 106) define a common cutting edge plane (108), which extends in parallel or substantially in parallel to the support face (30),
wherein, in particular, the cutting edge (88) has front cutting edge portions (104) and cutting edge portions (106) that are recessed in relation to said front cutting edge portions (104), and a cutting angle (98) of the front cutting edge portions (104) is smaller than a cutting angle (99) of the recessed cutting edge portions (106).

8. Apparatus in accordance with any one of Claims 2 to 7, **characterized in that** the at least one detaching element (44)
a) is of elastic configuration,
and/ord
b) is made of a detaching element material, and **in that** the detaching element material has a modulus of elasticity with a value in a range from about 100000 MPa to about 250000 MPa, in particular in a range from about 170000 MPa to about 210000 MPa,
and/or
c) is made at least in part, in particular the blade (48), of a metal, wherein, in particular, the metal is a steel, in particular a spring steel.

9. Apparatus in accordance with any one of Claims 2 to 8, **characterized in that** the detaching device (42) comprises a pressing device (102) for pressing the at least one detaching element (44) against the support face (30),
wherein, in particular, the pressing device (102) comprises at least one pressing element for pressing the at least one detaching element (44) against the support face (30).

10. Apparatus in accordance with any one of the preceding Claims, **characterized in that** the detaching device (42) comprises a holding device (52) for holding the at least one detaching element (44), wherein, in particular,
a) the at least one detaching element (44) in a holding position is held on the holding device (52) and in a separating position is separated from the holding device (52),
and/or
b) the holding device (52) and the support device (16) are arranged so as to be displaceable relative to one another, in particular in parallel to the support face (30).

11. Apparatus in accordance with any one of the preceding Claims, **characterized in that** the detaching device (42), in particular the at least one detaching element (44), and the support device (16) in a building position, in which at least one three-dimensional object (18) is formed by solidifying, in particular in layers or continuously, the material that is solidifiable by radiation, are out of engagement and in a detaching position, in which the at least one three-dimensional object (18) is separated from the support device (16), are in contact with one another.

12. Apparatus in accordance with any one of the preceding Claims, **characterized in that** the protective device (56)
a) is configured for protecting the detaching device (42) in the building position,
and/or
b) comprises at least one protective element (58) for protecting the at least one detaching element (44), in particular for protecting the blade (48).

13. Apparatus in accordance with any one of the preceding Claims, **characterized in that** the apparatus (10) comprises at least one drive device (40) for moving the detaching device (42) and the support device (16) relative to one another,
wherein, in particular, the at least one drive device (40)
a) is configured to cooperate with the holding device (52) for moving the holding device (52) relative to the apparatus (10),
and/or
b) is configured to cooperate with the support device (16) for moving the support device (16) relative to the apparatus (10) in parallel to the support face (30).

14. Apparatus in accordance with any one of the preceding Claims, **characterized in that** the apparatus (10)
a) comprises a container (12) for the solidifiable material, and **in that** the support device (16) is arranged so as to be moveable in a direction parallel to or substantially parallel to the direction of gravity (24) and counter to or substantially counter to the direction of gravity (24),
wherein, in particular, the detaching device (42) comprises at least one detaching element (44), wherein the at least one detaching element (44) is arranged or formed on the apparatus (10) so as to be immobile relative to the container (12), and wherein the support device (16) is arranged on the apparatus (10) so as to be moveable in a direction or a plane transverse to the direction of gravity (24),
and/or
b) comprises a collection container (112) for the three-dimensional object (18) that has been detached from the support device (16), wherein, in particular,
- the collection container (112), in particular a base (116) thereof, is perforated,
and/or
- the collection container (112) has a base (116) that is inclined in relation to the direction of gravity (24),
and/or
- the collection container (112) is arranged on the apparatus (10) so as to be moveable in a plane or direction that extend transversely to the direction of gravity (24),
and/or
- the detaching device (42) comprises at least one one detaching element (44) and the collection container is arranged so as to be moveable synchronously with or independently of the at least one detaching element (44).

15. Apparatus in accordance with any one of the preceding Claims, **characterized in that** the apparatus (10)
a) comprises a conveying device, in particular in the form of conveyor belt, for the three-dimensional object (18) that has been detached from the support device (16),
and/or
b) comprises a turning device for turning the three-dimensional object (18) that has been detached from the support device (16).

## Revendications

1. Dispositif (10) pour produire un objet tridimensionnel (18) par solidification, en particulier en couches ou en continu, d'un matériau solidifiable par rayonnement, lequel dispositif (10) comprend un dispositif de support (16) pour maintenir l'objet tridimensionnel solidifié (18), où le dispositif (10) comprend un dispositif de détachement (42) pour le détachement automatique d'un objet tridimensionnel (18) maintenu sur le dispositif de support (16), **caractérisé en ce que** le dispositif (10) comprend un dispositif de protection (56) pour la protection du dispositif de détachement (42).

2. Dispositif selon la revendication 1, **caractérisé en ce que** le dispositif de détachement (42) comprend au moins un élément de détachement (44) et **en ce que** le au moins un élément de détachement (44) et le dispositif de support (16) sont agencés ou conçus pour être mobiles l'un par rapport à l'autre,
où en particulier sur le dispositif (10) le au moins un élément de détachement (44)
a) est agencé ou conçu pour être immobile et le dispositif de support (16) est agencé pour être mobile sur le dispositif (10) dans une direction ou un plan transversalement à la direction de la gravité (24)
ou
b) est agencé pour être mobile dans un plan ou une direction qui s'étendent transversalement à la direction de la gravité (24).

3. Dispositif selon la revendication 2, **caractérisé en ce que** le au moins un élément de détachement (44) et une surface de support (30) définie par le dispositif de support (16), sur laquelle l'objet tridimensionnel (18) est maintenu, forment un angle de détachement (100),
où en particulier
a) l'une des deux surfaces de tranchant (94, 96) est dirigée à l'opposé de la surface de support (30) et cette surface de tranchant (94) et la surface de support (30) forment entre elles l'angle de détachement (100)
et/ou
b) la surface latérale biseautée (86) dirigée à l'opposé de la surface de support (30) et la surface de support (30) forment l'angle de détachement (100),
et/ou
c) l'angle de détachement (100) présente une valeur dans une plage de 0° à environ 20°, en particulier dans une plage de 0° à environ 10°,
et/ou
d) le dispositif (10) comprend un dispositif de réglage d'angle de détachement pour le réglage de l'angle de détachement (100)
ou
l'angle de détachement (100) est non modifiable.

4. Dispositif selon la revendication 2 ou 3, **caractérisé en ce que** le au moins un élément de détachement (44) comprend une lame (48) avec un tranchant (50) ou **en ce que** le au moins un élément de détachement (44) est conçu sous la forme d'une lame (48) avec au moins un tranchant (50).

5. Dispositif selon la revendication 4, **caractérisé en ce que** la lame (48) comporte un corps de lame (80) avec un côté avant de corps de lame (82) et un côté arrière de corps de lame (84) et **en ce que** le corps de lame (80) comporte au moins une surface latérale biseautée (86) par rapport au côté avant de corps de lame (82) et/ou au côté arrière de corps de lame pour former le tranchant (50) avec une arête de tranchant (88),
où en particulier
a) la au moins une surface latérale biseautée (86) forme un angle obtus (90) avec le côté avant de corps de lame (82)
et/ou
b) le corps de lame (80) comporte deux surfaces latérales biseautées (86, 87) pour former le tranchant (50) et une ligne d'intersection des deux surfaces latérales biseautées (86, 87) définit l'arête de tranchant (88), où en particulier la au moins une surface latérale biseautée (87) forme un angle obtus (91) avec le côté arrière de corps de lame (84),
ou
le corps de lame (82) ne comporte qu'une surface latérale biseautée (86) qui forme un angle aigu (92) avec le côté arrière de corps de lame (84), et une ligne d'intersection de la surface latérale biseautée (86) avec le côté arrière de corps de lame (84) définit l'arête de tranchant (88)
et/ou
c) le côté avant de corps de lame (82) et le côté arrière de corps de lame (84) s'étendent parallèlement l'un à l'autre
et/ou
d) l'arête de tranchant (88) est définie par deux surfaces de tranchant (94, 96) délimitant le tranchant (50) qui se coupent, qui se coupent à un angle de tranchant (98), et l'angle de tranchant (98) présente une valeur dans une plage d'environ 10° à environ 50°, en particulier une valeur dans une plage d'environ 20° à environ 40°,
et/ou
e) le au moins un élément de détachement (44) repose contre le dispositif de support (16) pour et pendant le détachement de l'objet tridimensionnel (18) ou est agencé à une petite distance du dispositif de support (16).

6. Dispositif selon l'une des revendications 2 à 5, **caractérisé en ce que** le dispositif de détachement (42) comprend deux éléments de détachement (44), qui sont agencés à distance l'un de l'autre,
où en particulier les deux arêtes de tranchant (88) des deux éléments de détachement (44) sont agencées à distance l'une de l'autre et les deux arêtes de tranchant (88) définissent un plan d'arête de tranchant (108) qui s'étend parallèlement ou sensiblement parallèlement à la surface de support (30).

7. Dispositif selon l'une des revendications 4 à 6, **caractérisé en ce que** le tranchant (50) comprend une arête de tranchant dentée (88) avec plusieurs sections d'arête de tranchant (104, 106) agencées parallèlement pour être décalées les unes par rapport aux autres et **en ce que** les sections d'arête de tranchant (104, 106) définissent un plan d'arête de tranchant commun (108) qui s'étend parallèlement ou sensiblement parallèlement à la surface de support (30),
où en particulier l'arête de tranchant (88) comporte des sections d'arête de tranchant avant (104) et des sections d'arête de tranchant (106) en retrait par rapport à celles-ci et un angle de tranchant (98) des sections d'arête de tranchant avant (104) est inférieur à un angle de tranchant (99) des sections d'arête de tranchant en retrait (106).

8. Dispositif selon l'une des revendications 2 à 7, **caractérisé en ce que** le au moins un élément de détachement (44)
a) est conçu pour être élastique
et/ou
b) est conçu en un matériau d'élément de détachement et **en ce que** le matériau d'élément de détachement comporte un module d'élasticité avec une valeur dans une plage d'environ 100000 MPa à environ 250000 Mpa, en particulier dans une plage d'environ 170000 Mpa à environ 210000 Mpa,
et/ou
c) est conçu au moins partiellement, en particulier la lame (48), en un métal,
où en particulier le métal est un acier, en particulier un acier pour ressorts.

9. Dispositif selon l'une des revendications 2 à 8, **caractérisé en ce que** le dispositif de détachement (42) comprend un dispositif presseur (102) pour presser le au moins un élément de détachement (44) contre la surface de support (30),
où en particulier le dispositif presseur (102) comprend au moins un élément presseur pour presser le au moins un élément de détachement (44) contre la surface de support (30).

10. Dispositif selon l'une des revendications précédentes, **caractérisé en ce que** le dispositif de détachement (42) comprend un dispositif de maintien (52) pour maintenir le au moins un élément de détachement (44),
où en particulier
a) le au moins un élément de détachement (44) est maintenu sur le dispositif de maintien (52) dans une position de maintien et séparé du dispositif de maintien (52) dans une position de séparation
et/ou
b) le dispositif de maintien (52) et le dispositif de support (16) sont agencés pour être déplaçables l'un par rapport à l'autre, en particulier parallèlement à la surface de support (30).

11. Dispositif selon l'une des revendications précédentes, **caractérisé en ce que** le dispositif de détachement (42), en particulier le au moins un élément de détachement (44), et le dispositif de support (16) ne sont pas en contact dans une position de construction dans laquelle au moins un objet tridimensionnel (18) est formé par solidification, en particulier en couches ou en continu, du matériau solidifiable par rayonnement, et sont en contact l'un avec l'autre dans une position de détachement dans laquelle le au moins un objet tridimensionnel (18) est séparé du dispositif de support (16).

12. Dispositif selon l'une des revendications précédentes, **caractérisé en ce que** le dispositif de protection (56)
a) est conçu pour protéger le dispositif de détachement (42) dans la position de construction
et/ou
b) comprend au moins un élément de protection (58) pour protéger le au moins un élément de détachement (44), en particulier pour protéger la lame (48).

13. Dispositif selon l'une des revendications précédentes, **caractérisé en ce que** le dispositif (10) comprend au moins un dispositif d'entraînement (40) pour déplacer le dispositif de détachement (42) et le dispositif de support (16) l'un par rapport à l'autre,
où en particulier le au moins un dispositif d'entraînement (40)
a) est conçu pour coopérer avec le dispositif de maintien (52) pour déplacer le dispositif de maintien (52) par rapport au dispositif (10)
et/ou
b) est conçu pour coopérer avec le dispositif de support (16) pour déplacer le dispositif de support (16) par rapport au dispositif (10) parallèlement à la surface de support (30).

14. Dispositif selon l'une des revendications précédentes, **caractérisé en ce que** le dispositif (10)
a) comprend un récipient (12) pour le matériau solidifiable et **en ce que** le dispositif de support (16) est agencé pour être mobile dans une direction parallèle ou sensiblement parallèle à la direction de la gravité (24) et opposée ou sensiblement opposée à la direction de la gravité (24),
où en particulier le dispositif de détachement (42) comprend au moins un élément de détachement (44), où le au moins un élément de détachement (44) est agencé ou conçu sur le dispositif (10) pour être immobile par rapport au récipient (12) et où le dispositif de support (16) est agencé sur le dispositif (10) pour être mobile dans une direction ou un plan transversalement à la direction de la gravité (24),
et/ou
b) comprend un récipient de collecte (112) pour l'objet tridimensionnel (18) détaché du dispositif de support (16),
où en particulier
- le récipient de collecte (112), en particulier un fond (116) de celui-ci, est perforé,
et/ou
- le récipient de collecte (112) comporte un fond (116) incliné par rapport à la direction de la gravité (24),
et/ou
- le récipient de collecte (112) est agencé sur le dispositif (10) pour être mobile dans un plan ou une direction qui s'étendent transversalement à la direction de la gravité (24),
et/ou
- le dispositif de détachement (42) comprend au moins un élément de détachement (44) et le récipient de collecte est agencé pour être mobile de manière synchrone ou indépendamment du au moins un élément de détachement (44).

15. Dispositif selon l'une des revendications précédentes, **caractérisé en ce que** le dispositif (10)
a) comprend un dispositif de transport, en particulier sous forme d'une bande transporteuse, pour l'objet tridimensionnel (18) détaché du dispositif de support (16),
et/ou
b) comprend un dispositif de retournement pour retourner l'objet tridimensionnel (18) détaché du dispositif de support (16).
